# EUROPEAN PATENT APPLICATION

(11) **EP 2 148 507 A1**
(43) Date of publication of application: **27.01.2010**
(21) Application number: 08740278.0
(22) Date of filing: 11.04.2008
(51) Int. Cl.: H04N 7/173, G06Q 30/00, H04N 5/44, H04N 5/765

(54) **COMMODITY PURCHASE SYSTEM, RECORDING/REPRODUCING DEVICE, AND COMPUTER PROGRAM**

(30) Priority: 12.04.2007 JP 2007105098
(71) Applicant: PTP, Inc., Tokyo, 151-0053 (JP)
(72) Inventor: ARIYOSHI, Masayasu, Tokyo 151-0053 (JP); SAKAGUCHI, Hitoshi, Tokyo 151-0053 (JP); KOMORIYA, Takeru, Tokyo 151-0053 (JP); TAKAHASHI, Masaya, Tokyo 151-0053 (JP); TAKAHASHI, Ryosuke, Tokyo 151-0053 (JP)
(74) Representative: Smeets, Eugenius Theodorus J. M.
(86) International application number: PCT/JP2008/057181
(87) International publication number: WO 2008/133049

(57) **Abstract**

[OBJECT]

A system is provided which is capable of obtaining merchandise information and making a merchandise purchase swiftly and easily when a user watching a recorded image of an analog broadcast takes an interest in articles of merchandise or service relative to the image.

[SOLVING MEANS]

When a program image or a CM image is displayed on a television screen, a user pushes a shopping execution button by the use of a remote controller 40. A digital recording/reproducing apparatus 10 confirms that a program image or a CM image is being normally displayed on the television, then establishes an Internet connection, and transmits a request signal of merchandise data relative to the program image or the CM image to a CM merchandise data server 60. The CM merchandise data server 60 makes a search for merchandise data corresponding to the request signal, and extracts the merchandise data from a merchandise DB 63. The merchandise data extracted therefrom is transmitted to the digital recording/reproducing apparatus 10, and is output to the television. When an article of merchandise that the user wishes to purchase is selected, a transition is made to a merchandise purchase screen, and the user can purchase the article.

## Description

### Technical Field

The present invention relates to a technique used to allow a television viewer who is an end-consumer to purchase articles of merchandise. In particular, the present invention relates to a system that allows a viewer to order an article of merchandise while watching a recorded television picture, relates to a digital recording/reproducing apparatus for use in this system, and relates to a control program that controls the system.

### Background Art

A commercial (abbreviated as "CM") is well known as a merchandise advertising method and as a merchandise-sales promotion means. A CM sponsor pays television-program production costs and so forth to an advertisement creating company or to a television station for advertising sponsor's articles of merchandise or sponsor's service in a fixed time frame (e.g., 15-second, 30-second, or 60-second time frame), thereby materializing the CM. The CM is produced as a 15-second or 30-second unit, and, in many cases, a plurality of commercials appear during a television program.

The CM sponsor has an advantage in the fact that television viewers who have watched the CM know and purchase articles of merchandise concerning the CM, and, as a result, sales grow.

Nowadays, a method of going to actual, nearby stores, a method of utilizing a mail-order service by telephone or fax, or a method of purchasing articles of merchandise by accessing a website concerning a CM or concerning merchandise information (i.e., by performing so-called Internet shopping) is generally adopted as a method according to which a television viewer obtains information about an article of merchandise concerning a CM or purchases the article. The Internet shopping enables users to easily obtain detailed information about an article of merchandise and is small in physical and time restrictions, and therefore the number of users is rapidly increasing.

Japanese Published Unexamined Patent Application No. 2001-258012 has been cited as a technique relative to the present invention (see Patent Literature 1). The technique disclosed in Patent Literature 1 is characterized by being capable of obtaining detailed information about, for example, an article of merchandise broadcasted in a TV commercial or capable of purchasing the article via the Internet by linking a piece of homepage data input to a commercial of digital broadcasting to the Internet by the use of a digital broadcasting receiving terminal.

Patent Literature 1: Japanese Published Unexamined Patent Application No. 2001-258012 A digital recording/reproducing apparatus, which records television programs onto a hard disk drive (hereinafter, referred to as an "HDD") and through which the recorded television programs are watched, has spread in recent years. The digital recording/reproducing apparatus is capable of recording and storing programs in an HDD that has been enlarged in capacity, and enables a television viewer to watch these programs regardless of televising time.

The digital recording/reproducing apparatus is provided with a function to skip at predetermined-time units (in many cases, 30-second units) in order to improve the convenience of watching recorded images. This function is performed so that a recorded image is fast-forwarded by 30 seconds by pushing a button once, and is restarted for reproduction.

### Disclosure of the Invention

### Problems to be Solved by the Invention

Patent Literature 1 merely discloses a technique specializing only in digital broadcasting, and does not disclose a concrete means for achieving a merchandise purchase from a CM screen in analog broadcasting that is dominantly adopted nowadays.

Additionally, users of the digital recording/reproducing apparatus often use the skip function in the following way in order to watch a recorded television program at almost any time and in a short amount of time efficiently. In more detail, for example, if a two-minute CM is inserted in a television program, a user can continuously watch the television program without watching the commercial by operating a button that gives an order to perform the skip function four times. The skipping of the commercial while watching the television program leads to the loss of a chance to introduce an article of merchandise and service that are connected to a CM sponsor, and hence leads to a decrease in an advantage to be gained as a CM sponsor.

A technique of guiding a television viewer from a television picture to a merchandise purchasing site is greatly expected in order to prevent the advantage of the CM sponsor from being reduced. However, this technique is required to be that of data transmission or that of two-way-communication digital broadcasting as disclosed in Patent Literature 1.

The present invention has been proposed in consideration of these problems. In other words, the present invention provides a technique capable of obtaining pieces of merchandise information and capable of making a merchandise purchase swiftly and easily when a user who records a current analog broadcast onto a digital recording/reproducing apparatus and who watches the recorded broadcast takes an interest in articles of merchandise or in service concerning the recorded image. Therefore, it is an object of the present invention to stop the skipping of a commercial to be watched by a viewer who has recorded a television program or to improve a CM contribution to sales directly and immediately as a result of the provision of the technique.

### Means for Solving the Problems

The present invention relates to a merchandise purchasing system in which, in a digital recording/reproducing system including a digital recording/reproducing apparatus capable of recording an image stream consisting of program images and CM images and a television capable of reproducing and outputting the image stream, an index server that stores an index table containing starting time and ending time of the program image or the CM image of the image stream and containing character information and a merchandise data server that stores merchandise data relative to the program image or the CM image are capable of transmitting the index table and the merchandise data to the digital recording/reproducing apparatus via the Internet.

The term "image stream" denotes an analog image signal consisting of two pieces of image data one of which is program image data that is image data concerning a television program and the other one of which is CM image data that is image data concerning a TV commercial (CM). The "program image" and the "CM image" recorded onto the image stream enable a corresponding program image and a corresponding CM image to be specified by an index table consisting of various pieces of index information such as a recording position table and to be reproduced and displayed on a television screen.

The term "index server" denotes a server that stores indexes based on which a program image or a CM image to be reproduced is determined when the digital recording/reproducing apparatus receives a reproductive signal to reproduce program images and CM images from an input means such as a remote controller. A plurality of data tables called an "index table" containing the recording positions of program images and CM images are stored in the index server, and, based on this index table, a reproductive signal to reproduce program images and CM images is transmitted to the digital recording/reproducing apparatus.

The term "index table" denotes a data table formed of a "recording position table" in which the starting time and the ending time of a program image or a CM image are recorded, a "program information table" used to specify the broadcasting station, the program title, the broadcasting date, and the broadcasting hours of each program image, a "CM information table" used to specify the company name, the trade name, the performers, the CM music, the broadcasting date, and the broadcasting hours, and so forth. The index table is recorded onto a recording means of the digital recording/reproducing apparatus, and a control means is called if necessary. The term "merchandise data server" denotes a server that contains a merchandise data base in which a plurality of pieces of merchandise data relative to a program image or a CM image are stored and that is capable of extracting all pieces of merchandise data or a piece of merchandise data desired by a user of the digital recording/reproducing apparatus and offering the merchandise data to the digital recording/reproducing apparatus. For example, this is a computer system that manages a so-called "shopping mall" formed of a plurality of shopping sites (electronic shops).

In the digital recording/reproducing apparatus of the present invention, an administrator or the like of the merchandise data server or of the index server can freely add, change, or modify the merchandise data stored in the merchandise data server and the indexes of the index table. Therefore, for example, when the "merchandise data" is changed, the administrator or the like of the merchandise data server can change the merchandise data stored in the merchandise data server, or when a URL (Uniform Resource Locator) allocated to a shopping site as an index is included and is changed, the contents of this index can be changed to contents including the URL that has been changed. Additionally, when the electronic shop side prepares a website showing that a shopping service has been completed, the index can be changed to an index including the URL of the prepared website when articles of merchandise are sold out. This advantage is beneficial both in digital broadcasting and in analog broadcasting, and is beneficial especially in analog broadcasting in which an index cannot be added to an image stream.

Although there is a case in which articles of merchandise relative to a piece of merchandise data are called from the merchandise data server if necessary, all article data may be downloaded and recorded onto the recording means of the digital recording/reproducing apparatus, and be output to a television while the control means is called if necessary.

Articles of merchandise relative to merchandise data are not limited to articles relative to a CM image, and include furniture used as a set in a program image (more specifically, in a predetermined drama), clothes worn by the dramatis personae, stage properties, and so forth. All of these pieces of data can be downloaded and recorded onto the recording means of the digital recording/reproducing apparatus, and can be output to a television while the control means is called if necessary. Note that the "articles of merchandise" relative to "merchandise data" include services offered by so-called service industries.

The term "purchase wish data" denotes data showing a manifestation of the intention of purchasing an article of merchandise relative to a piece of merchandise data output on a television. For example, when a shopping execution button (i.e., a shopping execution signal input means) disposed on a remote controller used to operate the digital recording/reproducing apparatus is operated, the main body of the digital recording/reproducing apparatus receives a signal emitted by operating the button, and transmits the signal to the merchandise data server in the form of purchase wish data of the article.

Merchandise data received from the merchandise data server is also output to the television at any time. If a viewer (i.e., user of the digital recording/reproducing apparatus) wishes to purchase an article of merchandise relative to the merchandise data output thereto, the purchase wish data is transmitted to the merchandise data server by the use of a purchase-wish-data transmitting means.

In Internet shopping, a personal computer (PC) is started, a Web browser is then opened to be connected to the Internet, a transition to, for example, a shopping site dealing the article is then made, the article is then searched in the shopping site, and a purchase procedure must be started.
As is apparent from a comparison, in the present invention, there is no need to start the PC and to obtain merchandise data by a search in the shopping site.

Additionally, it is recommended to allow the digital recording/reproducing apparatus to include a merchandise-data request signal detecting means for detecting a merchandise-data request signal indicating that detailed merchandise data relative to a reproduced image is requested and a merchandise-data request signal transmitting means for transmitting the fact that the merchandise-data request signal has been detected to the merchandise data server.

Additionally, the index table in the digital recording/reproducing apparatus includes an electronic tag table onto which a cueing signal indicating a cueing position pre-secured in a predetermined area of the recording means of the digital recording/reproducing apparatus by an operation of a user is recorded when the user wishes to execute the cueing of a predetermined scene while an image stream is being reproduced. The control means is formed to extract a corresponding cueing signal from the electronic tag table by a cueing-signal calling operation performed by the user and to start the reproduction of an image stream corresponding to the cueing signal by matching the extracted cueing signal and the image stream together.

The term "electronic tag" denotes a cueing signal used for the user to give a mark to a specific scene of the image stream, and is recorded onto the electronic tag table. There is a case in which the electronic tag is classified by color or is provided with names so that a plurality of users using the digital recording/reproducing apparatus and the kinds of images can be distinguished from each other.

The index is completely independent of the image stream. Therefore, in the digital recording/reproducing apparatus of the present invention, there is a need to match the index and the image stream together. In the digital recording/reproducing apparatus of the present invention, the matching is performed by using the electronic tag. Therefore, it should be noted that a technique of multiplexing additional information during image streaming or a technique of specifying an image by the use of a digital watermark embedded in the image is not adopted in the digital recording/reproducing apparatus of the present invention.

A user who desires cueing performs an operation for the cueing while an image stream is being reproduced. As a result of this operation, a cueing position desired by the user is recorded onto the electronic tag table of the HDD of the digital recording/reproducing apparatus in the form of a cueing signal. Thereafter, the user performs an operation to call a predetermined scene of the cueing desired by the user. As a result, a cueing recording signal recorded on the electronic tag table is called, and the control means starts an image stream from the cueing position. The user selects the cueing recording signal recorded on the electronic tag table, and, as a result, only the image scene desired by the user can be easily watched.

Additionally, a transition to a purchase screen of an article of merchandise relative to the reproduced image stream can be made, and the user can purchase the article by transmitting purchase wish data to the digital recording/reproducing apparatus when the image stream is reproduced from the cueing position.

Additionally, it is recommended to form a structure in which the merchandise data server includes a request signal receiving means for receiving a merchandise-data request signal transmitted by the merchandise-data request signal transmitting means, a merchandise data extracting means for extracting merchandise data corresponding to the merchandise-data request signal with reference to a pre-stored merchandise data base, and a merchandise data transmitting means for transmitting extracted merchandise data to the digital recording/reproducing apparatus. This structure makes it possible to offer merchandise data in accordance with a request and to output this merchandise data.

When a user watches an image output from the digital recording/reproducing apparatus to a television screen, the user of the digital recording/reproducing apparatus can see merchandise data on the television screen if the merchandise data about an article of merchandise relative to this image exists in the merchandise data server. Additionally, when the user determines to purchase the article by seeing the merchandise data, the user can transmit a manifestation of the intention of purchasing the article.

When the merchandise data extracting means cannot extract merchandise data corresponding to a merchandise-data request signal from the merchandise data server, a sales-applicant recruitment data transmitting means transmits sales-applicant recruitment data to a recruitment site in order to recruit sellers who can sell articles of merchandise relative to the merchandise data that cannot be extracted. On the recruitment site, a seller who has seen the sales-applicant recruitment data and who can sell the articles makes a successful bid, and a merchandise-sales data receiving means receives merchandise-sales data relative to the seller who has made a successful bid. Thereafter, a merchandise-sales data transmitting means transmits the merchandise-sales data received by the merchandise-sales data receiving means to the digital recording/reproducing apparatus. The control means of the digital recording/reproducing apparatus outputs the merchandise-sales data to the television.

There is a case in which data about an article of merchandise that the user wants to purchase does not exist in the merchandise data server. In this case, it is obvious that there is a need for this article, and hence the probability that a commercial transaction will succeed is heightened by recruiting a person who wishes to sell this article and by introducing this person to the user.

The index table may include CM information character data that specifies merchandise data relative to a CM image, and the CM information character data may include a CM sponsor name, a service name or trade name relative to the CM sponsor, a CM performer name, a CM title, a CM insert music, and the type of business to which the CM sponsor belongs.

This structure makes it possible to further search the merchandise data by the help of, for example, a vague impression and to improve search efficiency because the CM information character data includes the CM sponsor name, the service name or the trade name relative to the CM sponsor, the CM performer name, the CM title, the CM insert music, and the type of business to which the CM sponsor belongs.

Preferably, the index table includes program information character data relative to a program image, and the program information character data has a link structure with the merchandise data stored in the merchandise data server, and, as a result, the searching of the merchandise data can be facilitated.

It is recommended to extract data about an article of merchandise associated with a program image (inciting a user to make a purchase), not an image having a direct relationship with an article of merchandise like a CM image, in accordance with the necessity of a user. The program information character data is linked with merchandise data stored in the merchandise data server, and is associated with merchandise data about an article of merchandise relative to an image appearing in a program. Therefore, the user can search an article of merchandise associated with the program image.

If the program is, for example, a "travel-in-Hokkaido program," a plurality of articles of merchandise, such as "cheese" and "wine" introduced by the "travel-in-Hokkaido program," are recorded as pieces of program information character data. The program information character data, such as "cheese" and "wine," is linked with merchandise data, such as "cheese" and "wine," stored in the merchandise data server. Therefore, a user can search articles of merchandise relative to a program image even if the user is watching the program image.

The merchandise data server may include a purchase-wish-data receiving means for receiving purchase wish data transmitted from the purchase-wish-data transmitting means and a payment means for making payment for an article of merchandise by using the purchase wish data received therefrom.

The term "payment means" mentioned here denotes, for example, an accounting system that has generally spread in the Internet shopping. It is possible to adopt bank net payment that allows payment from a post-office account or a bank account, credit-card payment that allows payment by the use of a credit card, cash on delivery (COD), and escrow service. There is also a case in which a server for payment having a payment function is provided separately.

The purchase wish data transmitted from the purchase-wish-data transmitting means is received by the purchase-wish-data receiving means, and the payment means makes payment for the article by using the received purchase wish data. Through this system, the user of the digital recording/reproducing apparatus can execute a series of steps ranging from a manifestation of the intention of purchasing the article relative to the reproduced image to the payment therefor.

It is recommended to allow the merchandise data server to have a link structure that links related-merchandise data about an article of merchandise relative to an article of merchandise relative to merchandise data to this merchandise data.

The term "an article of merchandise relative to an article of merchandise relative to merchandise data" denotes an article having a predetermined relationship with an article relative to merchandise data. If the article relative to the merchandise data is, for example, a finished product, related merchandise is expendables, assembly tools, and so forth for the finished product. Alternatively, if the article relative to the merchandise data is "blue jeans that entertainer K wears," related-merchandise data is data about an article of merchandise similar in taste to the "blue jeans that entertainer K wears." The article similar in taste thereto corresponds to an article having a design of a different color, such as "black jeans that entertainer K wears," or an article having a fairly similar design.

Related-merchandise data has a great advantage especially when the merchandise data is data about clothing ornaments for clothes or the like. The reason is that, generally, many users have their wishes to acquire clothes that an entertainer has worn and to dress up as the entertainer. However, if another person wears completely the same clothes, a user will feel remarkably unpleasant and will hesitate. On the other hand, if the clothes are "black jeans that entertainer K wears" that are related-merchandise data, many users will be expected to have the satisfaction of dressing exactly like the entertainer and to take action to purchase the clothes if the clothes differ in color from those of the other person who has purchased the same merchandise when the user comes face to face with the other person.

In the above-mentioned example, the merchandise data of "black jeans that entertainer K wears" that is related-merchandise data is stored in the merchandise data server in addition to "blue jeans that entertainer K wears."

Related-merchandise data about articles of merchandise relative to the article relative to the merchandise data is also recorded on the merchandise data server. The related-merchandise data contains a link structure with the merchandise data. Therefore, users can gain widened room for a merchandise choice, and can make a merchandise purchase superior in prompt response.

Additionally, the present invention relates to a digital recording/reproducing apparatus that is capable of recording an image stream consisting of program images and CM images and that is capable of being connected to a television capable of reproducing and outputting a recorded image stream.

In more detail, the present invention is characterized by including an index table receiving means for receiving an index table from an index server that stores the index table containing starting time and ending time of a program image or a CM image of an image stream and containing character information, a merchandise data receiving means for receiving merchandise data from a merchandise data server that stores merchandise data relative to the program image or the CM image, a control means for reproducing an image on a television by the use of a received index table and for outputting the merchandise data received by the merchandise data receiving means to the television, and a purchase-wish-data transmitting means for transmitting purchase wish data with respect to the merchandise data output to the television to the merchandise data server.

The present invention is used with an index server that stores an index table containing starting time and ending time of a program image or a CM image of an image stream and containing character information and a merchandise data server that stores merchandise data relative to the program image or the CM image. This digital recording/reproducing apparatus is capable of receiving and transmitting pieces of data via the Internet from and to the index server and the merchandise data server.

Additionally, the present invention relates to a control program for a digital recording/reproducing apparatus that is capable of recording an image stream consisting of program images and CM images and that is capable of being connected to a television capable of reproducing and outputting a recorded image stream.

This program is a computer program that allows a control computer of the digital recording/reproducing apparatus to execute an index table receiving step of receiving an index table from an index server that stores the index table containing starting time and ending time of a program image or a CM image of an image stream and containing character information, a merchandise data receiving step of receiving merchandise data from a merchandise data server that stores merchandise data relative to the program image or the CM image, a control step of reproducing an image stream on a television by the use of the index table received therefrom and of outputting the merchandise data received by a merchandise data receiving means to the television, and a purchase-wish-data transmitting step of transmitting purchase wish data with respect to the merchandise data output to the television to the merchandise data server.

It is permissible to include an electronic tag table onto which a cueing signal pre-secured in a predetermined area of the recording means of the digital recording/reproducing apparatus by an operation of a user is recorded when the user wishes to execute the cueing of a specific image while the image stream is being reproduced. The control means may be formed to extract a corresponding cueing signal from the electronic tag table by a cueing-signal calling operation performed by the user and to start an image stream corresponding to the cueing signal by matching the extracted cueing signal and the image stream together.

The program of the present invention relates to a control program for a digital recording/reproducing apparatus that is capable of recording an image stream consisting of program images and CM images and that is capable of being connected to a television capable of reproducing and outputting a recorded image stream.

This program is a computer program that allows a control computer of the digital recording/reproducing apparatus to execute an index table receiving step of receiving an index table from an index server that stores the index table containing starting time and ending time of a program image or a CM image of an image stream and containing character information, a control step of reproducing an image on a television by the use of the index table received therefrom, a merchandise-data request signal detecting step of detecting a merchandise-data request signal to the effect that detailed merchandise data relative to a reproduced image is requested, a merchandise-data request signal transmitting step of transmitting the fact that the merchandise-data request signal has been detected to the merchandise data server, a merchandise-data receiving step of receiving merchandise data relative to the merchandise-data request signal from the merchandise data server, a merchandise-data outputting step of outputting merchandise data received therefrom to the television, and a purchase-wish-data transmitting step of transmitting purchase wish data with respect to the merchandise data output to the television to the merchandise data server.

Each of the computer programs mentioned above can be provided by being stored in a recording medium. The term "recording medium" mentioned here denotes a medium capable of carrying a program that does not occupy a space for itself, and examples of such recording mediums include a flexible disk, a hard disk, a CD-R, an MO (magnet-optical disk), and a DVD-R.

The program of the present invention can be also transmitted from a computer storing the program to another digital recording/reproducing apparatus through a communication line.

### Effects of the Invention

According to the present invention, it is possible to provide a system capable of obtaining pieces of merchandise information and capable of making a merchandise purchase swiftly and easily when a user watching a recorded image of an analog broadcast takes an interest in articles of merchandise or service relative to the image.

Additionally, according to the present invention, it is possible to provide a digital recording/reproducing apparatus capable of obtaining pieces of merchandise information and capable of making a merchandise purchase swiftly and easily when a user watching a recorded image of an analog broadcast takes an interest in articles of merchandise or service relative to the image.

Still additionally, according to the present invention, it is possible to provide a control program of a digital recording/reproducing apparatus capable of obtaining pieces of merchandise information and capable of making a merchandise purchase swiftly and easily when a user watching a recorded image of an analog broadcast takes an interest in articles of merchandise or service relative to the image.

Still additionally, according to the present invention, detailed information about articles of merchandise can be provided to persons watching a recorded image in a timely manner, and a sales promotion effect based on a CM image or a program image can be improved in order to enable the persons to make a merchandise purchase on the spot while watching the CM image or the program image therethrough.

### Best Modes for Carrying Out the Invention

Embodiments of the present invention will be hereinafter described with reference to the drawings.

### (First Embodiment)

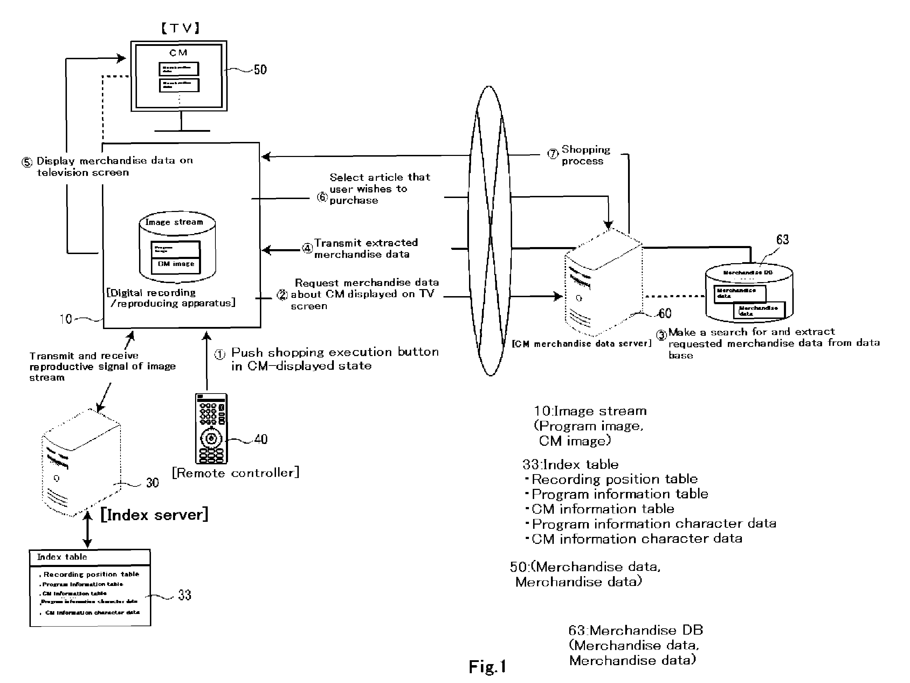

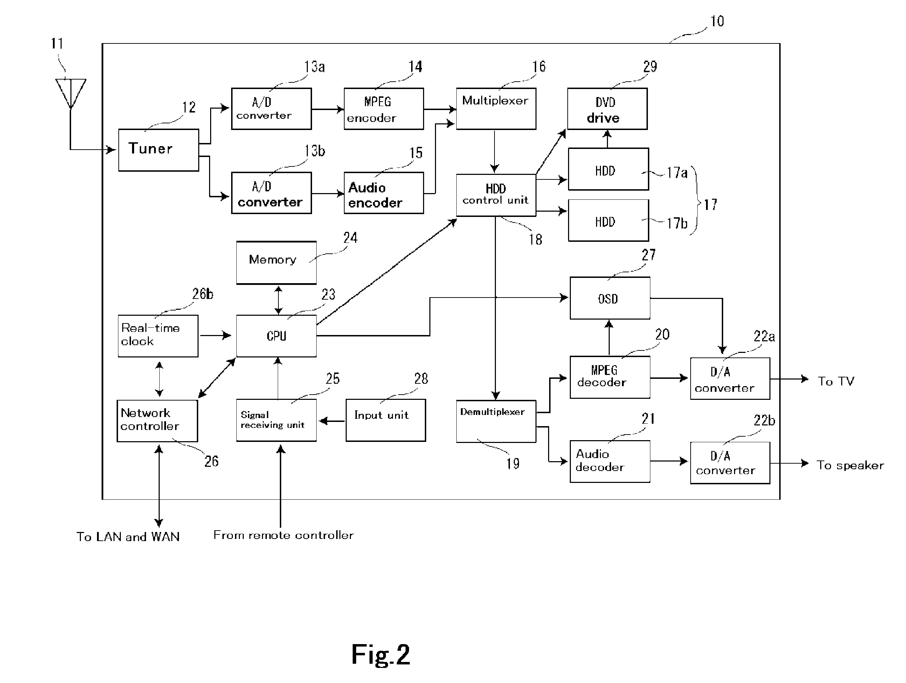

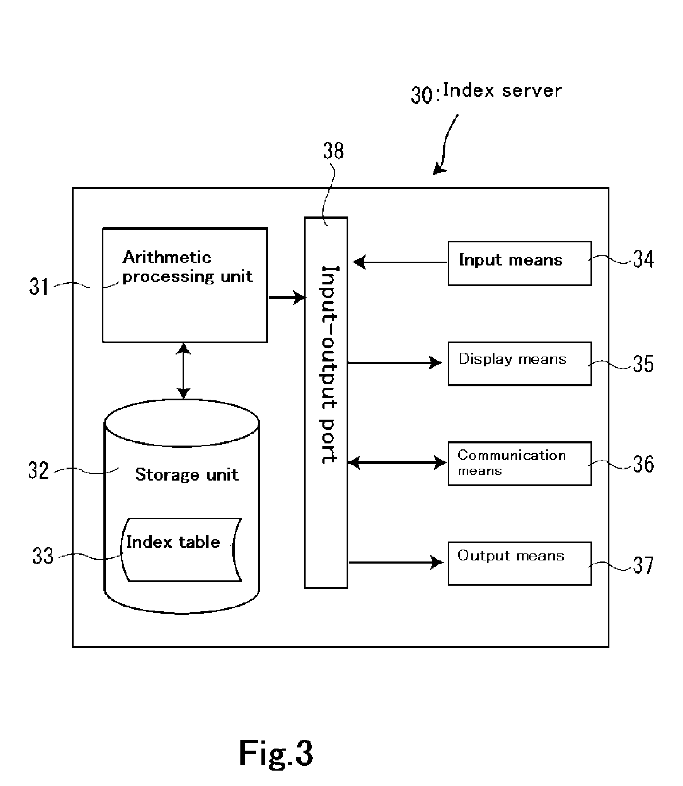

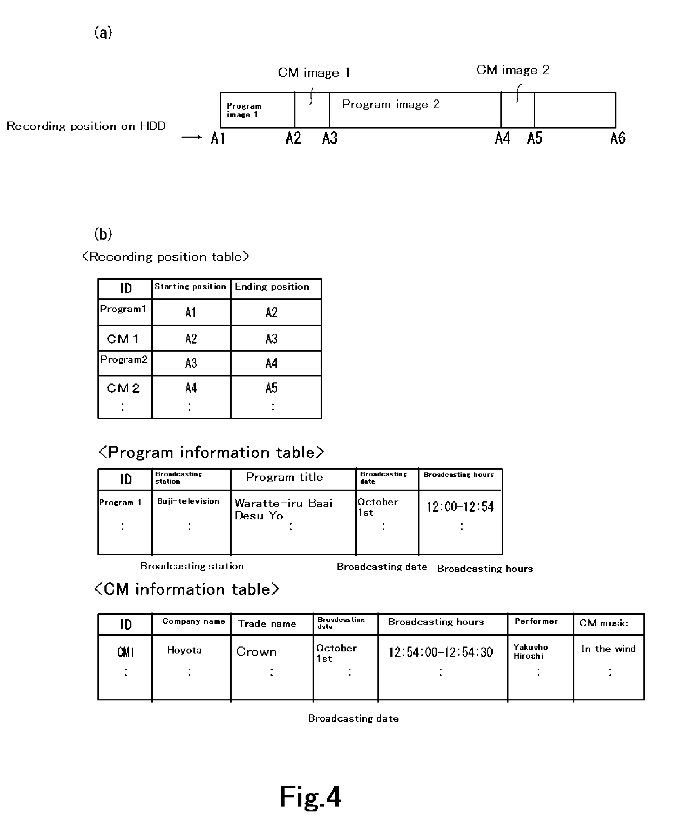

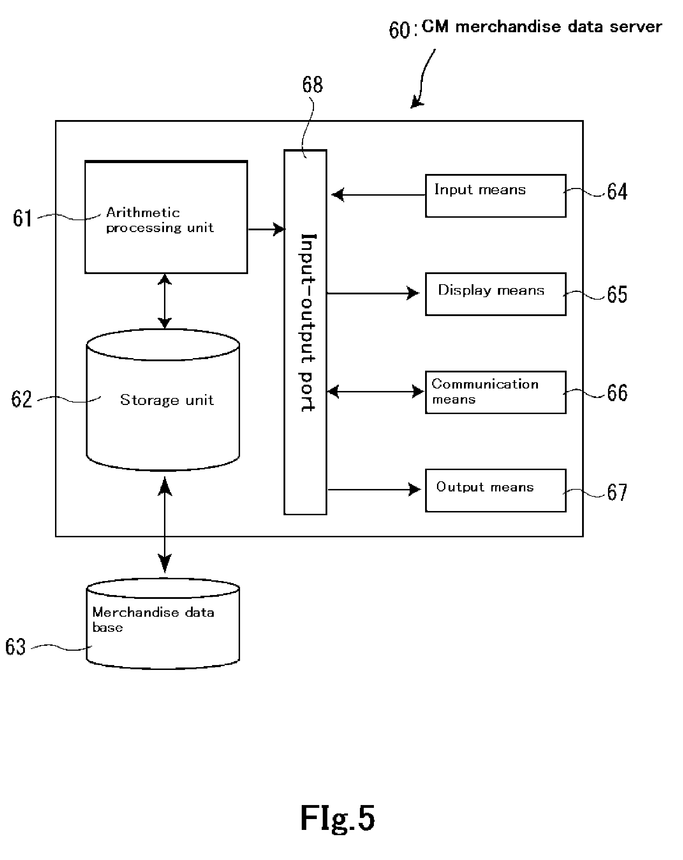

FIG. 1 is a schematic view showing the entire structure of a merchandise purchasing system according to the present invention, FIG. 2 is a block diagram showing a hardware structure of a digital recording/reproducing apparatus, FIG. 3 is a block diagram showing a hardware structure of an index server, FIG. 4 is a view explaining a relationship between an image stream and an index table, and FIG. 5 is a block diagram showing a hardware structure of a CM merchandise data server.

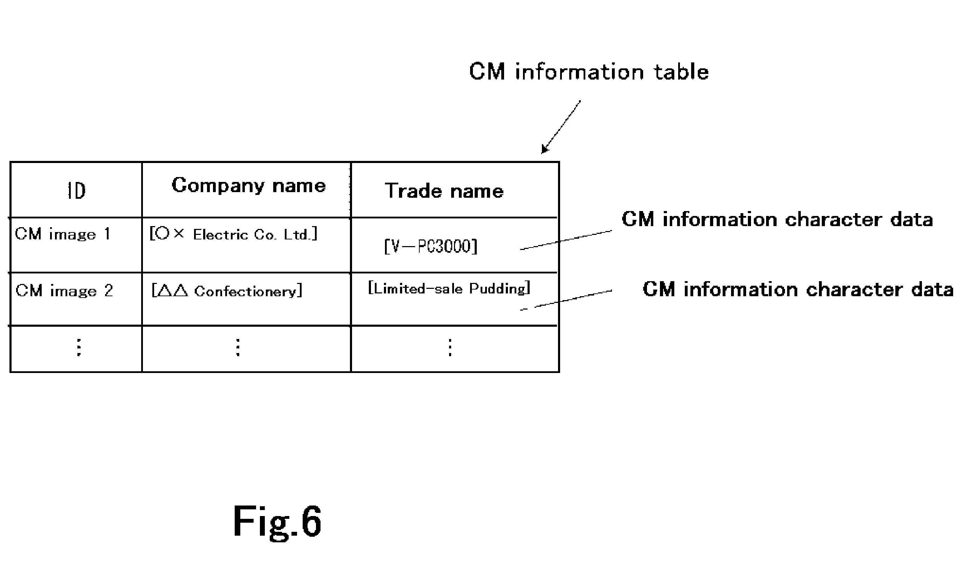

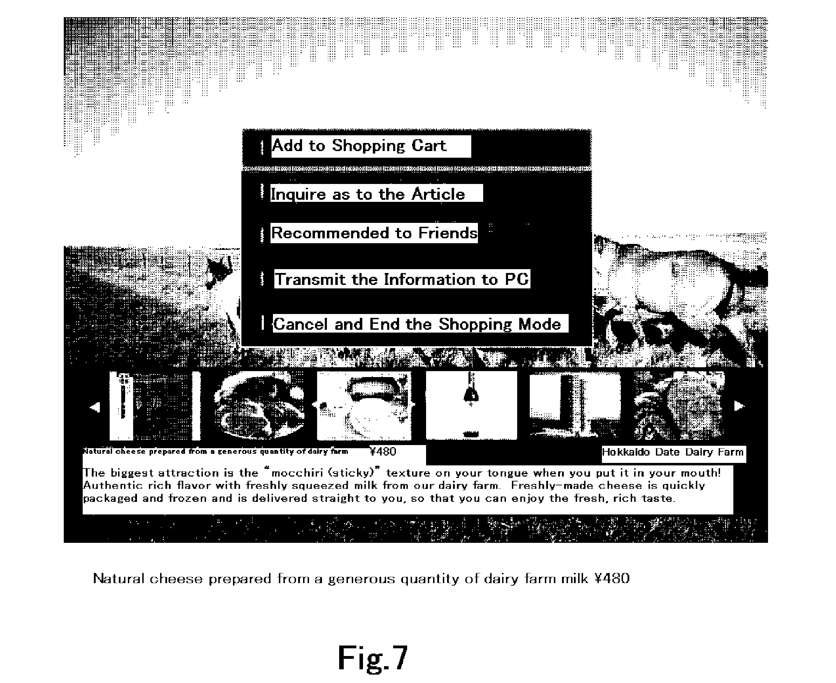

FIG. 6 is a view explaining a correspondence relationship between a CM image and a piece of CM information character data stored in an index table, and FIG. 7 is a view showing a screen displayed when a shopping execution button is pushed in a state in which a program image is displayed on a television.

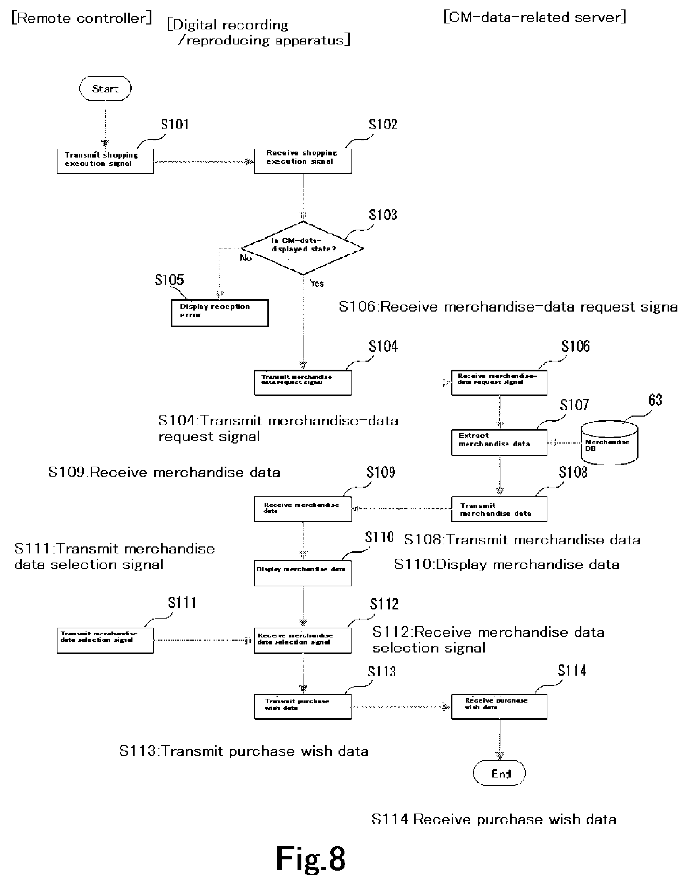

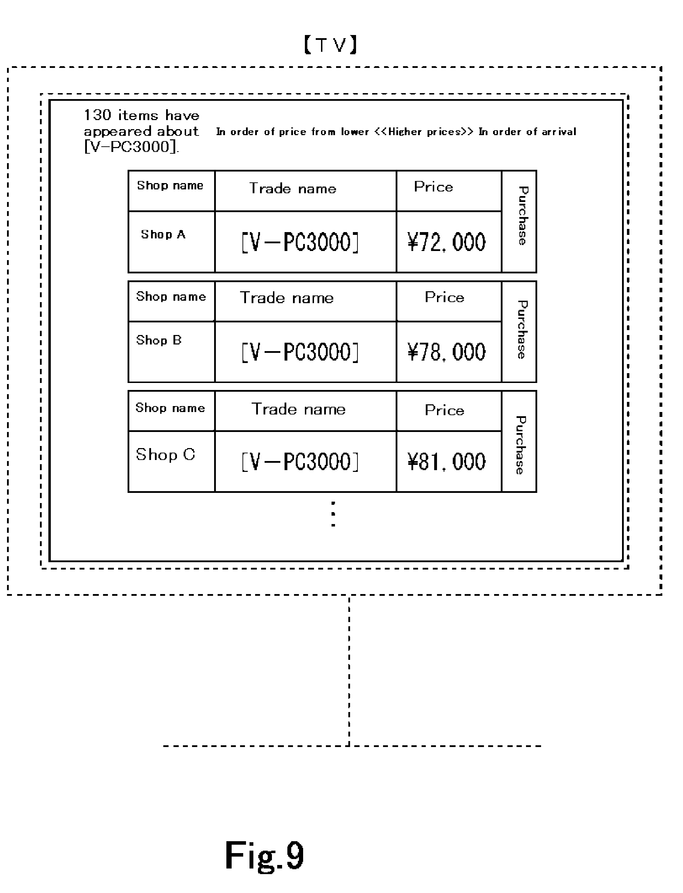

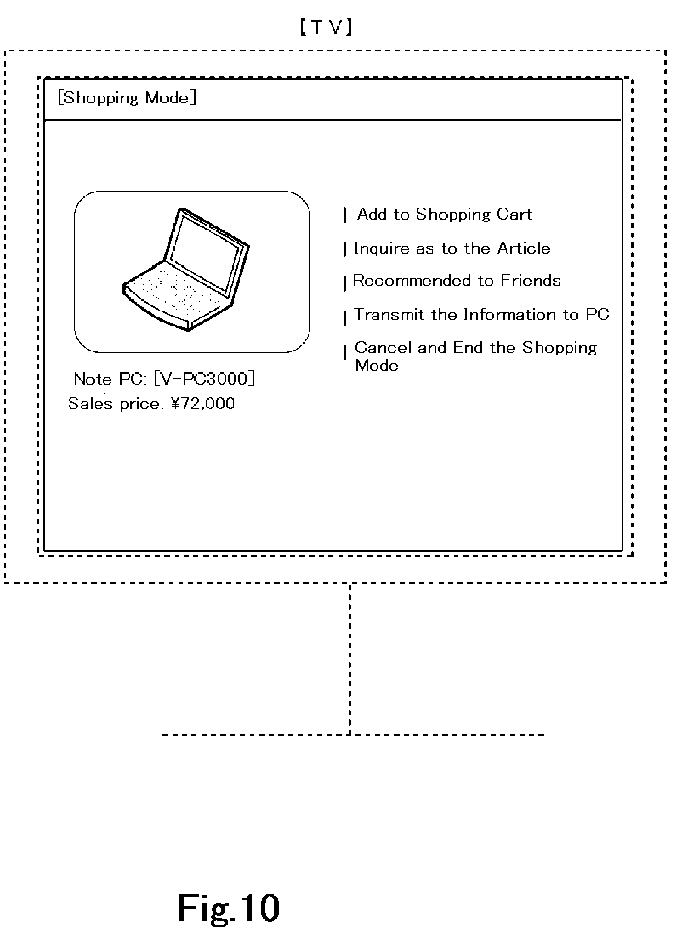

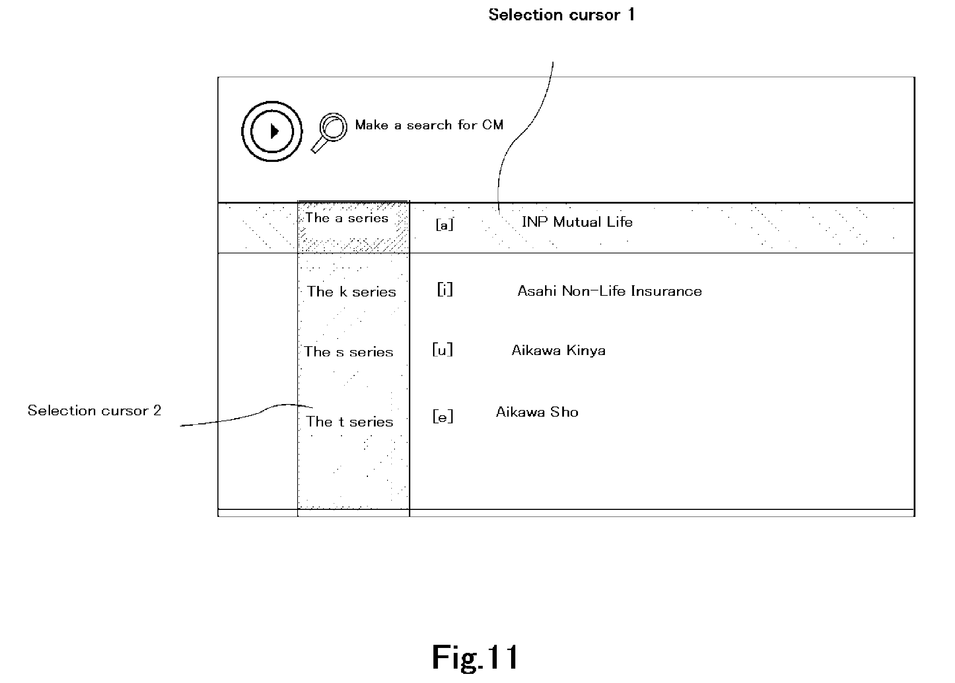

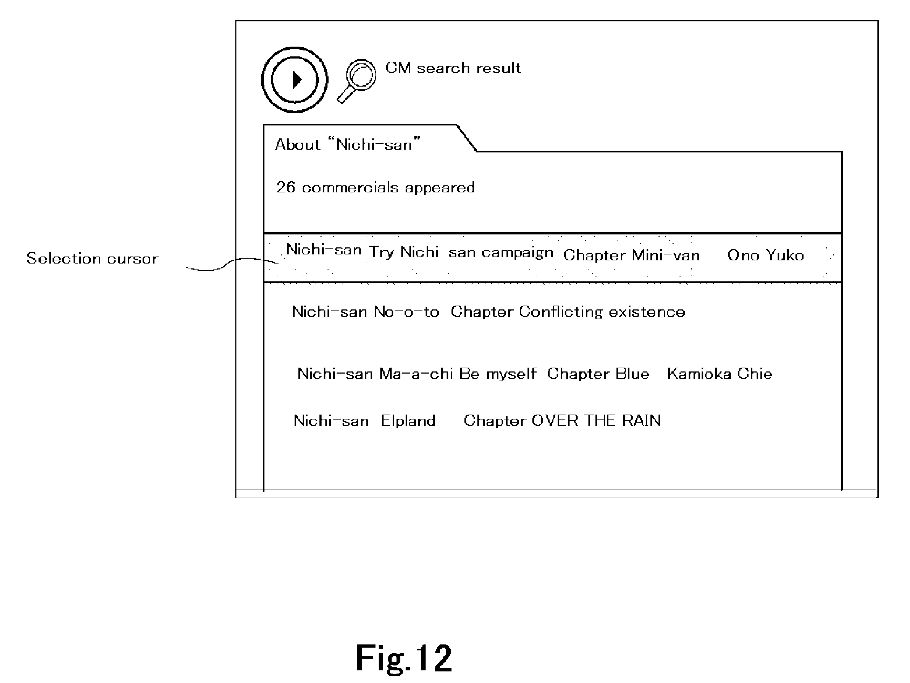

FIG. 8 is a flowchart showing steps ranging from a CM image screen to a merchandise purchase, FIG. 9 is a view showing a screen displayed when the shopping execution button is pushed while a CM image is being displayed, FIG. 10 is a view showing a detailed description of a predetermined article of merchandise and a purchase screen to which a transition is made when the article is selected, FIG. 11 is a view showing a screen displayed when a CM search function is executed, and FIG. 12 is a view showing a CM search result screen displayed by using the CM search function.

As shown in FIG. 1, the merchandise purchasing system is a system that enables a transition to a purchase procedure for purchasing an article of merchandise contained in CM image data shown on a display of a television 50 by allowing a user to press a button of a remote controller. This system includes a digital recording/reproducing apparatus 10 in which an image stream consisting of program images and CM images is stored, an index server 30 that has a function to transmit a reproductive signal of the image stream to the digital recording/reproducing apparatus 10, a television 50 on which the image stream output from the digital recording/reproducing apparatus 10 is displayed, and a CM merchandise data server 60 in which merchandise data relative to a CM image is stored. The digital recording/reproducing apparatus 10, the index server 30, and the CM merchandise data server 60 are Internet-connected together via a communication means.

To purchase an article of merchandise included in CM image data, a user operating the digital recording/reproducing apparatus 10 pushes a "shopping execution button" of a remote controller 40 while the CM image data is being shown on the display of the television 5, and merchandise data relative to a CM image appearing when the "shopping execution button" is pushed is searched from the merchandise data base 63 with respect to the CM merchandise data server 60. Thereafter, corresponding merchandise data is extracted from the merchandise data base 63, and the extracted merchandise data is transmitted to the digital recording/reproducing apparatus 10, and is displayed on a television screen. The user can do the shopping by selecting a desired piece of merchandise data from the merchandise data displayed on the screen of the television 50.

### (Digital recording/reproducing apparatus)

FIG. 2 is a view showing a hardware structure of the digital recording/reproducing apparatus 10. The digital recording/reproducing apparatus 10 includes an antenna 11 that receives an electric wave of a television signal from the television 50, a plurality of tuners 12 that select the electric wave received by the antenna 11 as a wave of a channel designated by a user and then demodulate this wave into an analog television signal, and A/D converters 13a and 13b each of which converts the analog signal given from the tuners 12 into a digital signal for an image and for an audio.

The digital recording/reproducing apparatus 10 further includes an MPEG encoder 14 that receives an image signal among the digital signals converted by the A/D converters 13a and 13b, an audio encoder 15 that receives an aural signal, a multiplexer 16 that receives an image signal and an aural signal that have been compressed and encoded by the MPEG encoder 14 and the audio encoder 15, respectively, then multiplexes a compressed and encoded stream, and converts the stream into an MPEG system stream (image stream), a plurality of hard disk drives (hereinafter, referred to as "HDD") 17 (17a, 17b) each of which records a program image and is a random access storage, an HDD control unit 18 that performs data-writing, data-reading, and various control operations with respect to the HDD 17, a demultiplexer 19 that divides the MPEG stream read from the HDD 17 into an image signal stream and an aural signal stream, and an MPEG decoder 20 that receives an image signal stream.

The digital recording/reproducing apparatus 10 further includes an audio decoder 21 that receives an aural signal stream, a digital/analog (D/A) converter 22a that receives a stream of the image signal decoded by the MPEG decoder 20, then converts the received image signal into an analog signal, and outputs the signal to the TV, and a D/A converter 22b that receives a stream of the aural signal decoded by the audio decoder 21, then converts the received aural signal into an analog signal, and outputs the signal to a speaker or the like.

The digital recording/reproducing apparatus 10 further includes a CPU 23 that controls the whole of the digital recording/reproducing apparatus 10, a memory 24 that temporarily stores a system stream and a working area of the CPU 23 and that is used as a working area to record pieces of data onto the HDD 17, and a signal receiving unit 25 that receives various input signals from the remote controller 40 and from an input unit 28 of the main body of the digital recording/reproducing apparatus 10 and transmits the input signals to the CPU 23. The digital recording/reproducing apparatus 10 further includes a network controller 26 that is connected to a LAN and a WAN for an Internet communication and that has a function to receive an EPG or time data and a function to transmit viewing data relative to a user.

The digital recording/reproducing apparatus 10 further includes a real-time clock 26b that accesses a timeserver by the use of an NTP (Network Time Protocol) of the network controller 26, then inquires about the present time, and synchronizes time data. The digital recording/reproducing apparatus 10 further includes an OSD (On Screen Display) 27 that enables a viewer to perform a menu operation by overlaying a menu screen on program images while displaying these images when the program images are reproduced or edited, and a DVD drive 29 that records a recorded program image onto an optical disk such as a DVD.

The digital recording/reproducing apparatus 10 further includes a shopping execution signal receiving means that reproduces a program image and a CM image on the screen of the television 50 when a reproductive signal of an image stream is received and that receives a shopping execution signal transmitted from a user, and a CM image display determining means that determines whether a predetermined CM image is displayed on the screen of the television 50 when a shopping execution signal is received.

The digital recording/reproducing apparatus 10 further includes a merchandise-data request signal transmitting means that transmits a merchandise-data request signal corresponding to the CM image displayed thereon to the CM merchandise data server 60 via the network controller 26 when the CM image display determining means determines that the CM image is being displayed on the television 50.

The digital recording/reproducing apparatus 10 further includes a merchandise-data display means that receives merchandise data transmitted from the CM merchandise data server 60 and displays the merchandise data on the screen of the television 50, a merchandise-data selection signal receiving means that, when a user selects a predetermined piece of merchandise data from among a plurality of pieces of merchandise data displayed on the merchandise-data display means, receives a selected piece of merchandise data, and a purchase-wish-data transmitting means that transmits the merchandise data selection signal to the CM merchandise data server 60 as a piece of purchase wish data.

The term "image stream" mentioned here denotes an analog image signal that is recorded onto the HDD 17 of the digital recording/reproducing apparatus 10 and that consists of two kinds of images, i.e., consisting of program images each of which is an image of a television program and CM images each of which is an image of a TV commercial. Among program images and CM images recorded on this image stream, a corresponding program image and a corresponding CM image are specified by the index table 30 consisting of various pieces of index information, are then reproduced, and are displayed.

The CM image display determining means has a function to determine whether a CM image is being normally displayed on the television 50 in an image stream being reproduced by the digital recording/reproducing apparatus 10 when a user pushes the shopping execution button of the remote controller 40. If it is determined that not a CM image but a program image is being displayed, an error display is output onto the television screen, and a shopping execution signal is not received. However, if merchandise data is introduced in the program image, a transition is made from this program image to a purchase screen relative to this merchandise data.

The term "purchase wish data" denotes data that is transmitted to the CM merchandise data server 60 in order to purchase an article of merchandise selected by a user. An identifier used to receive royalties when an article of merchandise is purchased on a shopping site of the CM merchandise data server 60 from the digital recording/reproducing apparatus 10 is recorded on the purchase wish data. In other words, this is an identifier by which the fact that "the article has been purchased by way of the digital recording/reproducing apparatus 10" is proved to a CM sponsor offering the CM image. An affiliate system may be adopted by using this identifier.

### (Index server)

FIG. 3 is a view showing a hardware structure of the index server 30. The index server 30 is Internet-connected to the digital recording/reproducing apparatus 10 via a communication means 36, and includes a means for transmitting index information, which is used for determining a program image and a CM image to be reproduced when the digital recording/reproducing apparatus 10 receives a reproductive signal of the program image and a reproductive signal of the CM image from the remote controller 40 and from other elements, to the digital recording/reproducing apparatus 10.

The index information transmitted thereto is formed as an index table 33 having a plurality of pieces of index information, such as a "recording position table" in which the starting position and the ending position of a program image or a CM image are recorded, a "program information table" that specifies the broadcasting station, the program title, the broadcasting date, and the broadcasting hours of each program image, a "CM information table" that specifies the company name, the trade name, the broadcasting date, the broadcasting hours, the performers, and the CM music, and an "electronic tag table" in which a cueing signal used to allow a user to give a mark to a specific scene of an image stream is recorded.

The hardware structure of the index server 30 includes an arithmetic processing unit 31 that is composed of a CPU (Central Processing Unit), a main memory, and so forth and that performs various arithmetic processing operations, a storage unit 32 that stores the index table 33 in which program information character data used to search for a program image and CM information character data used to search for a CM image are recorded in addition to various pieces of data, such as an operating system and application software, and the above-mentioned tables, an input means 34 such as a mouse or a keyboard, a display means 35 such as a display, a communication means 36 capable of being connected to a telecommunication line such as the Internet or an intranet, an output means 37 capable of outputting various pieces of data to, for example, a printer, and an input-output port 38 that serves as an input-output portion for various pieces of data.

FIG. 4(a) is a view of an image stream showing the recording position of a program image and the recording position of a CM image recorded on the HDD 17, and FIG. 4(b) is a view showing a "recording position table," a "program information table," and a "CM information table" in order from above.

The recording position table holds information [ID], information [starting position], and information [ending position]. For example, in ID "program 1," it is understood that the starting position is 'A1,' and the ending position is 'A2.' Additionally, the recording position table holds information showing that, in ID "CM1," the starting position is 'A2,' and the ending position is 'A3.' As is described in embodiments mentioned later, information, such as a time index, showing the receiving time (including a piece of information by which a broadcasting station is specified) is also recorded on the recording position table actually.

The program information table holds information [ID], information [broadcasting station], information [program title], information [broadcasting date], and information [broadcasting hours]. For example, in ID "program 1," the broadcasting station is `Buji-television,' the program title is 'Waratte-iru Baai Desu Yo,' the broadcasting date is 'October 1st,' and the broadcasting hours are '12:00-12:54.'

The CM information table holds information [ID], information [company name], information [trade name], information [broadcasting date], information [broadcasting hours], information [performer], and information [CM music]. For example, in ID "CM1," the company name is 'Hoyota,' the trade name is 'Crown,' the broadcasting date is 'October 1st,' the broadcasting hours are '12:00:00 - -12:54:30,' the performer is 'Yakusho Hiroshi,' and the CM music is 'In the wind.'

In other words, each table serves as a time index that is date-and-hour information in which a program image and a CM image are recorded on the digital recording/reproducing apparatus 10, and various pieces of index information, such as program title and program corner in the program image, and company name, trade name, and performer in the CM image are held, and hence these program and CM images can be reproduced and displayed in a detailed setting.

### (CM merchandise data server)

FIG. 5 is a view showing a hardware structure of the CM merchandise data server (merchandise data server) 60. The CM merchandise data server 60 shows one of the computers that manage a so-called "shopping mall" composed of a plurality of shopping sites (electronic shops). In this shopping mall, a tenant user who has contracted with an administrator constructs a shopping site serving as a virtual shop in a Web space of the CM merchandise data server 60, and the shopping mall is run by allowing a user who has accessed the shopping site via the Internet to purchase an article of merchandise.

The hardware structure of the CM merchandise data server 60 includes an arithmetic processing unit 61 that is composed of a CPU, a main memory, and so forth and that performs various arithmetic processing operations, a storage unit 62 in which various pieces of data, such as an operating system and application software, are stored, a merchandise data base 63 in which a plurality of pieces of merchandise data relative to a CM image are stored, an input means 64 such as a mouse or a keyboard, a display means 65 such as a display, a communication means 66 capable of being connected to a telecommunication line such as the Internet or an intranet, an output means 67 capable of outputting various pieces of data to, for example, a printer, and an input-output port 68 that serves as an input-output portion for various pieces of data.

The CM merchandise data server 60 has at least the following functions. In detail, the CM merchandise data server 60 has a merchandise-data request signal receiving means that receives a merchandise-data request signal transmitted from the merchandise-data request signal transmitting means of the digital recording/reproducing apparatus 10, a merchandise data extracting means that extracts corresponding merchandise data from merchandise data pre-stored in the merchandise data base 63 based on the merchandise-data request signal received therefrom, a merchandise data transmitting means that transmits the merchandise data extracted therefrom to the digital recording/reproducing apparatus 60, a purchase-wish-data receiving means that receives purchase wish data transmitted from the digital recording/reproducing apparatus 10, and a payment means that makes a payment for an article of merchandise based on the purchase wish data received therefrom.

### (Merchandise data base)

The merchandise data base 63 is an external storage formed as a part of the storage unit of the CM merchandise data server 60, and is a data base in which a plurality of pieces of merchandise data relative to a program image or a CM image are stored. More specifically, a plurality of pieces of merchandise data in a plurality of shopping sites managed by the CM merchandise data server 60 are stored therein. For example, in a case in which an article of merchandise relative to a program image or a CM image selected by a user is designated as an "article Z" by the CM information character data of the index table 33, let it be supposed that there are fifty shopping sites each of which provides the "article Z" in a shopping mall. In this case, all "articles Z" of the fifty shops can be extracted, can be then transmitted to the digital recording/reproducing apparatus 10, and can be displayed on the television 50.

### (Payment)

An accounting system that has generally spread in the Internet shopping is adopted as the payment means in the merchandise purchasing system. A bank net payment that allows a user to make a payment from a post-office account or a bank account, a credit-card payment that allows a user to make a payment by the use of a credit card, and cash on delivery (COD) are dominantly adopted as the payment means, and, in addition, an escrow service may be adopted. There is also a case in which a server for payment having a payment function is provided separately. In this case, the server is network-connected to the CM merchandise data server 60 by, for example, an intranet, and is physically isolated from the CM merchandise data server 60 by means of a firewall, and achieves a payment by encrypting the personal information of a user through a data-encrypting function such as SSL.

A server for shopping sites that provides merchandise data relative to a program image or a CM image is also used as the server for payment. In other words, if a server for payment is provided separately from the CM merchandise data server 60, shopping can be done safely.

### (CM information character data)

FIG. 6 is a view explaining a correspondence relationship between a CM image and a piece of CM information character data stored in the index table 33.

As shown in FIG. 6, CM information character data that corresponds to each CM image and that is needed when merchandise data is searched and extracted from the merchandise data base 63 is stored in the index table 33.

The CM information character data contains [ID] by which a CM image is specified, [company name] of a CM sponsor, and [trade name] that are arranged in this order from the left. In CM image 1, the name of a company providing the commercial is [ox Electric Co. Ltd.], and the trade name is [V-PC3000], and hence the CM information character data corresponding to CM image 1 is [ox Electric Co. Ltd.] and [V-PC3000]. In CM image 2, the name of a company providing the commercial is [ΔΔ Confectionery], and the trade name is [Limited-sale Pudding], and hence the CM information character data corresponding to CM image 2 is [ΔΔ Confectionery] and [Limited-sale Pudding].

There is also a case in which the CM information character data contains various pieces of data, such as "CM performer name," "CM title," "CM insert music," and "type of business to which the CM sponsor belongs" which are omitted for descriptive convenience, in addition to [company name] and [trade name] mentioned above.

Presumably, when merchandise data is connected to a program image, a plurality of sponsors or a plurality of articles of merchandise correspond thereto. Therefore, a plurality of sponsor names or a plurality of trade names exist in the CM information character data. In this case, a list of a plurality of sponsors and a plurality of articles of merchandise is displayed, and a user can appropriately make an arbitrary selection from among these items.

### (Merchandise purchase from program images)

Although a system in which a merchandise purchase can be made from a commercial has been described in the above-mentioned embodiment, the system according to the present invention also enables a user to make a merchandise purchase from a program image. This is achieved by associating the merchandise data stored in the merchandise data base 63 with "program information character data." In other words, a merchandise purchase can be made not only from a CM image but also from a program image if an article of merchandise is placed in the program image or if an article of merchandise is introduced as the program image.

In other words, data about an article of merchandise associated with a program image (inciting a user to make a purchase), not an image having a direct relationship with an article of merchandise like a CM image, is formed to be extracted in accordance with the necessity of a user.

Program information character data is linked with merchandise data stored in the merchandise data server. The program information character data is associated with merchandise data about articles of merchandise relative to images appearing in a program. Therefore, a user can also search for articles of merchandise associated with the program images.

If the program is, for example, a "travel-in-Hokkaido program," a plurality of articles of merchandise, such as "cheese" and "wine" introduced by the "travel-in-Hokkaido program" are recorded as pieces of program information character data. These pieces of program information character data, such as "cheese" and "wine," are linked with merchandise data, such as "cheese" and "wine," stored in the merchandise data server. Therefore, even when a user is watching a program image, the user can search for these articles.

The CM merchandise data server 60 contains merchandise data about program images, and is also used when an article of merchandise is purchased from a program image. However, the CM merchandise data server 60 may be used in such a manner that the CM merchandise data server 60 is separately set as a program merchandise data server, and only data about articles of merchandise relative to a program image is stored in a merchandise data base so that a reply can be made to a response offered from a user.

FIG. 7 is a view showing a screen displayed when a shopping execution button is pushed in a state in which a program image is displayed on the television 50. In detail, when a user pushes the shopping execution button, a plurality of articles of merchandise introduced in a program image are overlaid at the lower part of FIG. 7. A predetermined article of merchandise is then selected from among those articles while sliding those articles displayed as a group. As a result, various selection items, i.e., the item "Add to Shopping Cart," the item "Inquire as to the Article," the item "Recommended to Friends," the item "Transmit the Information to PC," and the item "Cancel and End the Shopping Mode" are displayed near the center of the screen. If the predetermined article is selected, and an operation for the item "Add to Shopping Cart" is performed here, a transition will be made to the payment screen.

### (Automatic execution of article search)

The CM merchandise data server 60 further has a function to automatically input article search information. This is a function to receive information about related-merchandise data and to automatically make a search based on CM information character data stored in the index table 33 by pushing the shopping execution button because the CM information character data is associated with each program image and each CM image. When the CM information character data is received, search algorithm in which the sponsor name and the trade name are searched in the manner of [and search] is used, and a search is automatically made by pushing the shopping button. For example, in CM image 1, a search is made in the manner of [ox Electric Co. Ltd. * V-PC3000].

In other words, the CM merchandise data server 60 searches and extracts merchandise data corresponding to CM information character data received via the digital recording/reproducing apparatus 10 from the merchandise data base by the CM information character data. A search for merchandise data associated with a program image and with a CM image is made while using a shopping execution signal transmitted from a user as a trigger. Therefore, in normal cases, a search-type input operation that is required before a user purchases an article of merchandise can be removed.

### (Merchandise purchase from CM image screen)

Next, steps ranging from a CM image screen to a merchandise purchase will be described with reference to FIG. 8. When a desired CM image is displayed on the television screen, a user transmits a shopping execution signal by the use of the remote controller 40 of the digital recording/reproducing apparatus 10 (S101). The digital recording/reproducing apparatus 10 receives the shopping execution signal transmitted from the remote controller 40 (S 102). When it is detected that the shopping execution signal has been received, it is determined whether the CM image is normally displayed on the television 50 (S103). If the CM image is displayed on the television 50, the network controller 26 establishes an Internet connection with the CM merchandise data server 60, and a merchandise-data request signal that corresponds to the CM image displayed thereon is transmitted to the CM merchandise data server 60 (S104). On the other hand, if the CM image is not displayed on the television 50, a reception error is displayed on the television screen (S105).

The CM merchandise data server 60 receives the merchandise-data request signal (S106), and merchandise data that corresponds to the merchandise-data request signal is extracted from merchandise data pre-stored in the merchandise data base 63 (S107). Thereafter, the merchandise data extracted therefrom is transmitted to the digital recording/reproducing apparatus 10 (S108).

When the digital recording/reproducing apparatus 10 receives the merchandise data transmitted from the CM merchandise data server 60 (S 109), the digital recording/reproducing apparatus 10 allows the television 50 to display the merchandise data (S110). If the user selects a predetermined piece of merchandise data from among the pieces of merchandise data displayed on the television 50 by the use of the remote controller 40 here, a merchandise data selection signal of the merchandise data selected by the user is transmitted (S111). The digital recording/reproducing apparatus 10 receives the merchandise data selection signal transmitted from the user (S112), and then the selected merchandise data is transmitted to the CM merchandise data server 60 as a piece of purchase wish data (S113). The CM merchandise data server 60 receives the purchase wish data (S114).

FIG. 9 is a view showing a screen displayed when the shopping execution button is pushed while a CM image is being displayed, and FIG. 10 is a view showing a detailed description of an article of merchandise and a purchase screen both of which are displayed when shop "A" is selected. Herein, CM image 1 shown in FIG. 7 will be described as an example.

When a user was watching television, a personal computer [V-PC3000] of [ox Electric Co. Ltd.] was displayed on the television screen, and the user took an interest in this personal computer. Therefore, the user pushed the shopping execution button by the use of the remote controller 40. As a result, the television screen was switched, and a merchandise image, price information, and detailed information about [V-PC3000] in a plurality of shops (e.g., shop "A," shop "B," and shop "C" in FIG. 10) were displayed. Although the price information is sorted in order of prices from low to high in default setting, the setting of the price information can be arbitrarily changed by pushing buttons for the order of prices from high to low or for the order of arrival from new to old that are provided at the upper part of the screen. In the detailed information, [V-PC3000] is hyperlinked, and merchandise specifications, word-of-mouth information, and so forth can be browsed by selecting this hyperlink function.

Herein, the user wanted to purchase the article at shop "A" showing the lowest price, and selected the [purchase] displayed at the right end. As a result, switching was performed to the detailed description of merchandise information and the purchase screen in shop "A." As shown in FIG. 10, this screen shows the specifications of [V-PC3000] selected by the user, the image thereof, price information thereabout, and various selection items, i.e., "Add to Shopping Cart," "Inquire as to the Article," "Recommended to Friends," "Transmit the Information to PC," and "Cancel and End the Shopping Mode."

Since the user determined to purchase the article from shop "A," the user selected "Add to Shopping Cart," and made a transition to a payment procedure. The user selected a credit-card payment as the payment procedure. The user inputs user data, such as name and address, and card data concerning the credit card to an input form, and transmits these pieces of data to a shopping site in a state encrypted by SSL. To input these pieces of data, the keyboard is connected to an external input port (not shown), such as a USB port, installed in the digital recording/reproducing apparatus 10, thus facilitating a data-input operation.

As described above, the use of the present system makes it possible to purchase articles of merchandise relative to a program image or a CM image that has been output from the digital recording/reproducing apparatus 10 to the television screen when a user is watching the program image or the CM image. The difference from general Internet shopping resides in the fact that the present invention does not need to perform various operations, i.e., does not need to start the PC, to launch the Web browser, to be connected to the Internet, to input data about articles of merchandise relative to the program image or the CM image from a search engine, to make a search, and to move to a corresponding shopping site. In other words, if there is an article of merchandise lying on user's mind, a transition can be smoothly made to the shopping site merely by pushing the shopping button while the user is watching a program image or a CM image.

A great advantage is exerted especially onto a user (for example, an aged person) inexperienced in PC operations or in the Internet. Additionally, the CM merchandise data server automatically makes a search based on CM information character data merely by pushing the shopping execution button, and hence there is no need to perform a character input operation required to make a search for articles of merchandise, and, for example, an error in inputting the serial number of an article of merchandise does not occur.

### (CM search function)

The present system further has a CM search function on the digital recording/reproducing apparatus side. This is composed of a CM image searching means for, when CM information character data input by a user is received, searching for CM images stored in the HDD 17 based on the received CM information character data, and a CM image reproducing means for extracting and reproducing a CM image for which the CM image searching means has searched.

In this CM search function, when the user makes a search for a desired article of merchandise by the use of an input means, such as the remote controller 40 or the keyboards, the CM image searching means searches for a CM image based on CM information character data used in the searching operation while referring to the image stream of the HDD 17. Thereafter, the CM image reproducing means extracts the CM image retrieved thereby, and reproduces and displays this CM image on the television screen.

FIG. 11 is a screen shown by executing the CM search function. In the CM search step, [gyo (i.e., a phonologically-based series of characters in the syllabary)] s, that is, [the a series], [the k series], [the s series], [the t series], [the n series], [the h series], [the m series], [the y series], [the r series], and [the w series] are arranged in this order from the left, and a selection cursor 1 is moved to a desired [gyo] by sliding this cursor upwardly and downwardly. If [the a series] is selected here, items [a], [i], [u], [e], [o] are newly displayed. Accordingly, a selection cursor 2 is slid rightward, and then the selection cursor 1 is slid upwardly and downwardly so as to be moved to a desired one of these items. If [a] is selected here, company names or performer names whose initial is [a] are newly displayed at the right of the screen, and a commercial displayed thereon is selected by using the selection cursor 1.

FIG. 12 is a screen showing a CM search result displayed after the commercial is selected. For example, when a CM search is made by using the CM information character data of [nichi-san], the search result of [nichi-san] is displayed. Herein, twenty-six commercials were retrieved by the CM search, and, as a result, the message "[26 commercials appeared] were obtained concerning the CM of [nichi-san]" was displayed, and a list of these commercials by the CM search was displayed. Pieces of CM detailed information consisting of [company name], [CM title], [performer] are displayed in this order from the left side of the screen. The user selects a CM that the user wishes to watch while sliding the selection cursor upwardly and downwardly, and, as a result, the CM selected by the user is reproduced and displayed on the television 50.

In other words, the digital recording/reproducing apparatus 10 has a search function only for CM images, and therefore this brings about the convenience of enabling the user to make a search for or reproduce the CM image of a desired article or service whenever the user wants. Additionally, the chances that the user will browse CM images are increased by the CM search function, and hence a CM sponsor can expect that the CM effect will be improved. This contributes to the sales promotion of articles of merchandise or the promotion of services.

There is a fear that a chance to browse articles or services provided by a CM sponsor will be lost if a viewer skips a CM image and watches only a program image by using a 30-second skip function. This has been an undesirable function for a CM sponsor. However, even if the present system is constructed by the use of a digital recording/reproducing apparatus having a skip function, the chance that an article of merchandise of a CM sponsor retrieved by the CM search function will be purchased is provided. Therefore, this is a system suitable also for the CM sponsor.

### (Auction function)

The present system has an auction function. This is realized by allowing the CM merchandise data server 60 to include a sales-applicant recruitment data transmitting means for, if merchandise data that corresponds to a merchandise-data request signal has not been extracted by the merchandise data extracting means, transmitting sales-applicant recruitment data used to recruit sellers, who can sell an article of merchandise relative to the merchandise data not extracted thereby, via the Internet to a predetermined recruitment site, a merchandise-sales data receiving means for receiving merchandise-sales data relative to a seller who has made a successful bid on the recruitment site, and a merchandise-sales data transmitting means for transmitting the merchandise-sales data received thereby to the digital recording/reproducing apparatus 10.

In other words, if the merchandise data extracting means has failed to extract merchandise data that corresponds to a merchandise-data request signal from the CM merchandise data server 60, the sales-applicant recruitment data transmitting means transmits sales-applicant recruitment data to the recruitment site in order to recruit sellers who can sell an article of merchandise relative to the merchandise data that the merchandise data extracting means has failed to extract.

On the recruitment site, a seller who has seen the sales-applicant recruitment data and who can sell the article makes a successful bid, and the merchandise-sales data receiving means receives merchandise-sales data relative to the seller who has made a successful bid. Thereafter, the merchandise-sales data transmitting means transmits the merchandise-sales data received by the merchandise-sales data receiving means to the digital recording/reproducing apparatus 10. The control means of the digital recording/reproducing apparatus 10 outputs the merchandise-sales data to the television.

There is also a case in which data about an article of merchandise that a user wants to purchase does not exist in the CM merchandise data server 60. In this case, it is obvious that there is a need for this article, and a commercial transaction is established by recruiting a person who wishes to sell this article and by introducing this person to the user.

### (Related-merchandise data)

The CM merchandise data server 60 has a link structure that links related-merchandise data about an article of merchandise relative to an article of merchandise relative to merchandise data to this merchandise data.

The term "an article of merchandise relative to an article of merchandise relative to merchandise data" mentioned here denotes an article having a predetermined relationship with an article relative to merchandise data. If the article relative to the merchandise data is, for example, a finished product, related merchandise is expendables, assembly tools, and so forth for the finished product. Alternatively, if the article relative to the merchandise data is "blue jeans that entertainer K wears," related-merchandise data is data about an article of merchandise similar in taste to the "blue jeans that entertainer K wears." The article similar in taste thereto corresponds to an article having a design of a different color, such as "black jeans that entertainer K wears," or an article having a fairly similar design.

Related-merchandise data has a great advantage especially when the merchandise data is data about accessories for clothes or the like. The reason is that, generally, many users have their wishes to acquire clothes that an entertainer has worn and to dress up as the entertainer. However, if another person wears completely the same clothes, a user will feel remarkably unpleasant and will hesitate. On the other hand, if the clothes are "black jeans that entertainer K wears" that are related-merchandise data, many users will be expected to have the satisfaction of dressing exactly like the entertainer and to take action to purchase the clothes if the clothes differ in color from those of the other person who has purchased the same merchandise when the user comes face to face with the other person.

In the above-mentioned example, the merchandise data of "black jeans that entertainer K wears" that is related-merchandise data is stored in the merchandise data server in addition to "blue jeans that entertainer K wears." In other words, users can gain widened room for a merchandise choice, and can make a merchandise purchase superior in prompt response by allowing the CM merchandise data server 60 to have related-merchandise data. Of course, this idea about related-merchandise data applies not only to the field of accessories for dress but also to the field of personal computers and digital home electric appliances.

### (Electronic tag function)

The digital recording/reproducing apparatus 10 has an electronic tag function. This includes an electronic tag table onto which a cueing signal pre-secured in a predetermined area of the recording means of the digital recording/reproducing apparatus by an operation of a user is recorded when the user wishes to execute the cueing of a specific image while an image stream is being reproduced. The control means extracts a corresponding cueing signal from the electronic tag table by a cueing-signal calling operation performed by the user and starts an image stream corresponding to the cueing signal by matching the extracted cueing signal and the image stream together.

The term "electronic tag" mentioned here denotes a cueing signal used for the user to give a mark to a specific scene of the image stream, and is recorded onto the electronic tag table. There is a case in which the electronic tag is classified by a plurality of colors so that a plurality of users using the digital recording/reproducing apparatus and the kinds of images can be distinguished from each other. The electronic tag table may be recorded onto an area differing from that of the image stream.

An operation for cueing is performed by a user who wishes to execute the cueing while an image stream is being reproduced. An electronic tag is recorded onto the electronic tag table of the HDD 17 of the digital recording/reproducing apparatus 10 by performing this operation. Thereafter, the user performs an operation to call a cueing recording signal.

Accordingly, the cueing recording signal recorded on the electronic tag table is called, and the control means starts the image stream matched with the cueing recording signal. Only an image scene that the user wants to watch can be easily watched by allowing the user to select the cueing recording signal recorded on the electronic tag table.

Additionally, when the image stream matching the cueing recording signal is reproduced, the digital recording/reproducing apparatus 10 is allowed to transmit purchase wish data, and, as a result, a transition is made to a purchase screen for an article of merchandise relative to the reproduced image stream, and it becomes possible for the user to purchase the article.

### (Second Embodiment)

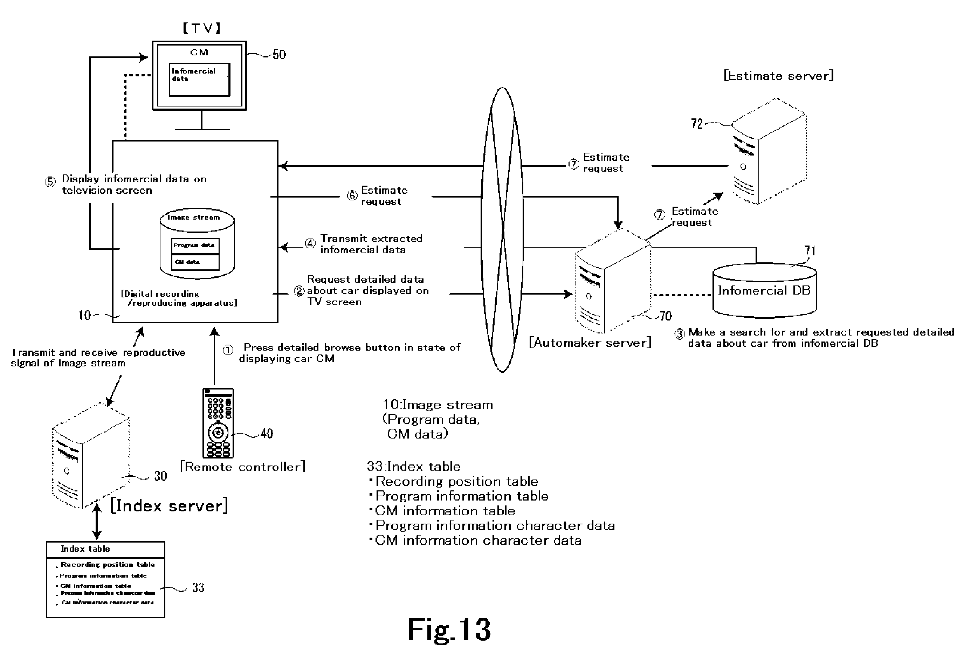

FIG. 13 is a view showing a second embodiment of the present invention. In the second embodiment, the system is formed so as to display infomercial data relative to a CM image output from the digital recording/reproducing apparatus 10 when a detailed browse button of the remote controller 40 is pushed in a state in which the CM image output therefrom is being displayed on the television 50.

In detail, the system includes the digital recording/reproducing apparatus 10 in which an image stream consisting of program images and CM images is stored, the television 50 on which an image stream output from the digital recording/reproducing apparatus 10 is displayed, the index server 30 having a function to transmit a reproductive signal of an image stream to the digital recording/reproducing apparatus 10, an automaker server 70 that is used for automakers and in which infomercial data relative to CM images is stored, and an estimate server 72 that is used for an estimate and that has a function to calculate estimate data by receiving estimate request from the automaker server 70. In this system, the automaker server 70, the estimate server 72, the digital recording/reproducing apparatus 10, and the index server 30 are Internet-connected via the network controller (communication means) 26.

The term "infomercial data" mentioned here denotes image data that introduces information concerning an article of merchandise or concerning service for approximately 5 to 30 minutes. In this embodiment, a user can browse infomercial data relative to a new car provided by an automaker on TV at home.

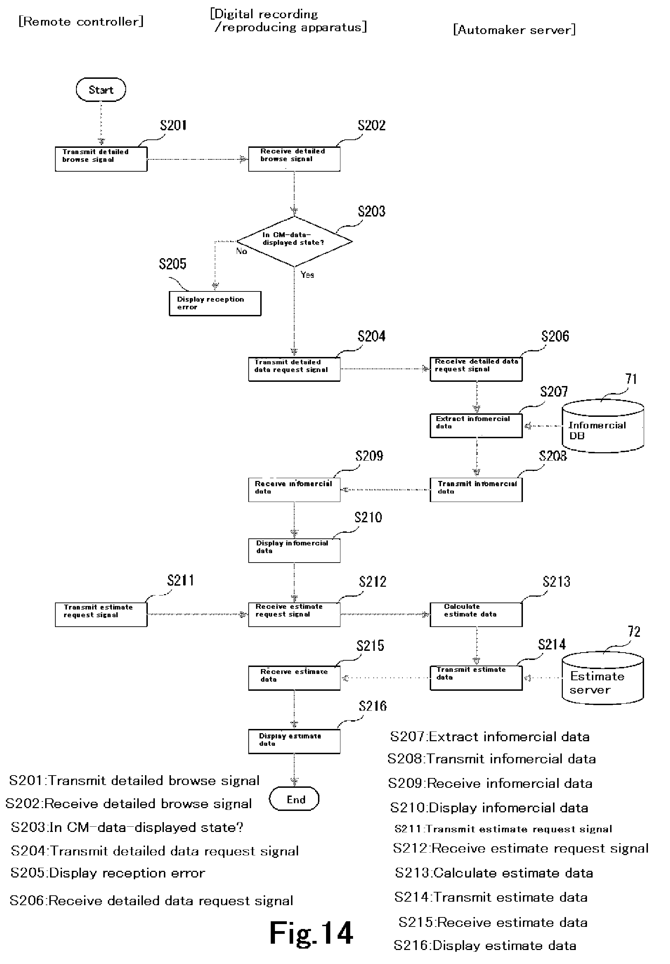

A series of steps will be described with reference to FIG. 14. When a CM image of the automaker is displayed on the television screen, the user transmits a detailed browse signal (detailed browse button) by the use of the remote controller 40 of the digital recording/reproducing apparatus 10 (5201). The digital recording/reproducing apparatus 10 receives the detailed browse signal transmitted from the remote controller 40 (S202). It is detected that the detailed browse signal has been received, and then it is determined whether the CM image is normally being displayed on the television 50 (S203). If the CM image is being displayed on the television 50, the network controller 26 establishes an Internet connection with the automaker server 70, and a detailed data request signal that corresponds to the CM image displayed thereon is transmitted to the automaker server 70 (S204). On the other hand, if the CM image is not being displayed on the television 50, a reception error is displayed on the television screen (S205).

The automaker server 70 receives the detailed data request signal (S206), and then a piece of infomercial data that corresponds to the request of the user is extracted from a plurality of pieces of infomercial data pre-stored in the infomercial data base 71 (S207). Thereafter, the infomercial data extracted therefrom is transmitted to the digital recording/reproducing apparatus 10 (S208).

The digital recording/reproducing apparatus 10 receives the infomercial data transmitted from the automaker server 70 (S209), and a message and a signal indicating that the reception of the infomercial data has been completed are displayed on the screen so as to incite the user to see the data. The user sees infomercial image data about features or specifications of new-car data reproduced and displayed on the television 50 by the use of special software installed in the digital recording/reproducing apparatus 10 while operating a remote controller 40.

This image data is provided with a car-estimate link button embedded therein, and has a function to receive an estimate request from a user. In detail, if the user selects the estimate link displayed thereon, an estimate request signal selected by the user is transmitted to the digital recording/reproducing apparatus 10 (S211). The digital recording/reproducing apparatus 10 receives the estimate request signal transmitted from the user (S212), then calculates the estimate data about the requested car with reference to the estimate server 72 (S213), and transmits the calculated estimate data to the digital recording/reproducing apparatus 10 (S214).

The digital recording/reproducing apparatus 10 receives the estimate data transmitted therefrom (S215), and an estimate result is displayed on the television screen (S216). This estimate data can be stored in a storage means, such as an HDD, installed in the estimate server 72 by inputting various pieces of user data, such as addresses, names, and telephone numbers. For example, this estimate data can be used when business talks are carried out at a nearby automobile dealer appointed by the user.

Additionally, the user can easily browse infomercial data relative to a CM image provided by an automaker merely by pushing the detailed browse button when the digital recording/reproducing apparatus 10 reproduces the CM image. Additionally, if the user takes a liking to the car by browsing the data, the user can proceed directly to an estimate procedure. Additionally, the probability of letting more users see infomercial data provided by an automaker offering a CM image is increased, and, as a result, the probability of proceeding to a purchase from an estimate is increased, and therefore this is desirable to the automaker. There is also a case in which a day on which an infomercial image is requested differs from a day on which an estimate request is made after a downloaded infomercial is seen. The reason is that the infomercial data is an image data and has a large capacity, and therefore probably takes much time for downloading.

Additionally, the accounting system in the second embodiment can be adopted as being arbitrary. For example, a term-of-a-contract method can be adopted in which a period for which infomercial data is streamed by pushing the detailed browse button during the broadcast of a commercial between the present system and a sponsor (e.g., an automaker) is pre-set, and a predetermined rate is charged in accordance with this period, or a meter rate method can be adopted in which the number of browse request times when the detailed browse button has been pushed from the digital recording/reproducing apparatus 10 or the number of times when an estimate request button has been pushed is recorded, and a rate is charged to an automaker in accordance with the number of times.

The embodiments mentioned above are merely examples, and the present invention is not limited to these embodiments.

It is also possible to adopt merchandise purchasing systems described in, for example, the following examples.

### Examples

### (Example 1)

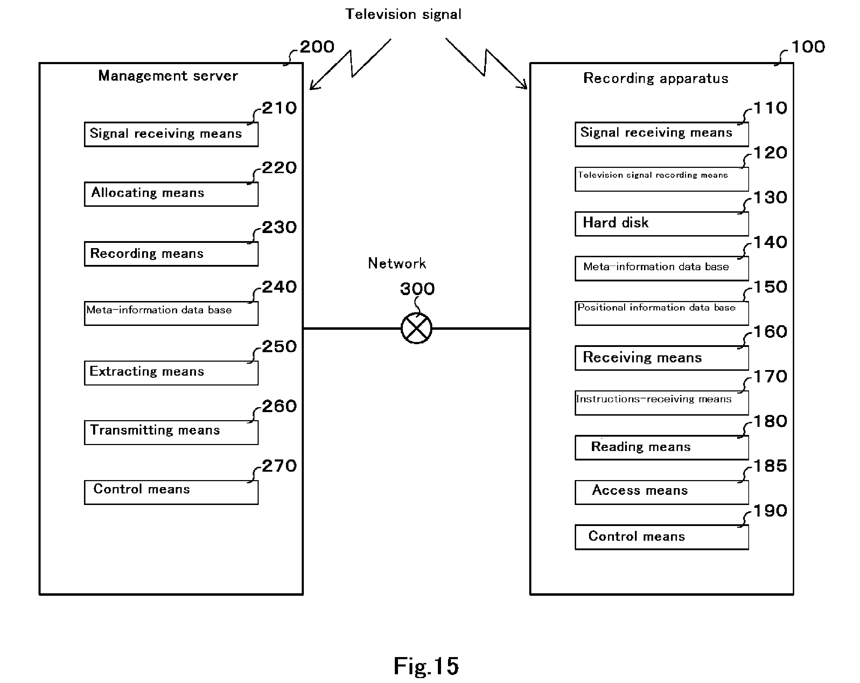

FIG. 15 is a function block diagram showing a schematic structure of an information recording/reproducing system (merchandise purchasing system) according to Example 1 of the present invention. As shown in FIG. 15, the information recording/reproducing system according to the present example has main elements consisting of a recording apparatus 100 including a built-in type recording medium onto which at least image data and audio data among television signals transmitted from a television signal transmitting station are recorded, a management server 200 used to order an article of merchandise that a user wishes to purchase based on image data or other data reproduced by the recording apparatus 100, and a network 300, such as the Internet, through which the recording apparatus 100 and the management server 200 are connected together.

The recording apparatus 100 corresponds to a unit formed of the digital recording/reproducing apparatus 10, the index server 30, and a part of the CM merchandise data server 60 each of which has been described in the above embodiments. The management server 200 corresponds to the part of the CM merchandise data server 60.

The recording apparatus 100 includes a signal receiving means 110, a television signal recording means 120, a hard disk 130, a meta-information data base 140, a positional information data base 150, a receiving means 160, an instructions-receiving means 170, a reading means 180, an access means 185, and a control means 190, each of which is described later.

The signal receiving means 110 is chiefly composed of the antenna 11 and the analog or digital tuner 12. In other words, the signal receiving means 110 serves to receive a television signal having a pre-set condition among television signals transmitted from the television signal transmitting station.

The broadcasting type of television signals is any one of terrestrial analog broadcasting, terrestrial digital broadcasting, analog cable television broadcasting, digital cable television broadcasting, analog satellite broadcasting, digital satellite broadcasting, and Internet broadcasting.

The television signal recording means 120 is chiefly composed of the MPEG encoder 14, the audio encoder 15, the multiplexer 16, the hard disk drive 17, and the HDD control unit 18 that controls the operation of the hard disk drive. In other words, the television signal recording means 120 serves to encode, multiplex, and record the image data received by the signal receiving means 110, the audio data received by the signal receiving means 110, and, if necessary, a text for text broadcasting onto the hard disk 130.

Here, in the present example, the television signal recording means 120 records image data and the like onto the hard disk 130 in a physically or logically seamless manner. When the data is recorded thereonto, the television signal recording means 120 generates positional information indicating a physical or logical recording position of, for example, the image data in the hard disk 130, and outputs the positional information to the positional information data base 150 along with information indicating the receiving time of, for example, the image data.

The hard disk 130 is a recording medium onto which image data and so forth are recorded by the use of the television signal recording means 120. Text data for text broadcasting may be recorded onto the hard disk 130 along with the image data. Instead of the hard disk 130 or in addition to the hard disk 130, a DVD, a flash memory, etc., may be used as the recording medium. The DVDs include so-called next-generation DVDs that are called "HDDVD" or "Blu-ray Disc."

A data recording means 135 is realized as one function of a data base engine. The data recording means 135 records meta-information (merchandise data) and so forth transmitted from the management server 200 onto the meta-information data base 140. The meta-information contains "category," "manufacturer name," "trade name," "merchandise image," "detailed explanatory text," "merchandise code," and "user's review," each of which is for various articles of merchandise in image data in a television program. A user of the recording apparatus 100 can obtain merchandise information relative to meta-information stored in the meta-information data base 140 by executing a searching process described later if the meta-information is shown on the display of the television 50 connected to the recording apparatus 100. The data recording means 135 further records positional information output from the television signal recording means 120, information about receiving time, and information about a television signal transmitting station onto the positional information data base 150.

The meta-information data base 140 corresponds to a CM information table or a program information table. In this example, meta-information and so forth transmitted from the management server 200 through the network 300 are recorded thereon. Positional information, receiving-time information, meta-information, and a time index appending thereto may be recorded onto one data base without preparing two data bases, i.e., without preparing the meta-information data base 140 and the positional information data base 150.

The positional information data base 150 corresponds to a recording position table and to a CM information table or a program information table. Positional information output from the television signal recording means 120, information indicating receiving time, and information indicating a television signal transmitting station are recorded thereonto. What is required of the information indicating the receiving time is to have a one-to-one correlation with a time index that is an identifier allocated by the management server 200. Typically, it is recommended to form the information indicating the receiving time in the same manner as the time index allocated by the management server 200. At this time, a one-to-one correlation between the time indexes can be established because the time of the recording apparatus 100 and the time of the management server 200 are synchronized with each other by the use of, for example, NTP in the present example as described later.

The extracting means 155 is realized as one function of the data base engine. The extracting means 155 extracts meta-information and so forth recorded on the meta-information data base 140 or on the positional information data base 150.

The receiving means 160 receives meta-information and so forth transmitted from the management server 200 via the network 300.

The instructions-receiving means 170 receives various instruction signals transmitted from the remote controller 40 over the wireless that includes infrared rays, and corresponds to the signal receiving unit 25. From the viewpoint of operability, the remote controller 40 may have its key arrangement imitated from that of a cellular phone so as to be adopted as a possible method. Additionally, the remote controller 40 may be not a wireless type but a cable type.

It is recommended to provide the remote controller 40 with buttons such as a "merchandise browse/purchase button (shopping execution button)" and a "search button." When a user presses the "merchandise browse/purchase button," and the control means 190 detects that the "merchandise browse/purchase button" has been pressed, meta-information is output from the recording apparatus 100 to the display of the television 50. Further, it is recommended to form a structure in which a designated article of merchandise can be purchased via the Internet when the user presses the "merchandise browse/purchase button" in a state in which meta-information is shown on the display of the television 50. Additionally, it is recommended to form a structure in which a search for a designated article of merchandise can be made via the network 300 when the user presses the "search button" in a state in which meta-information is shown on the display of the television 50. A concrete operation of the recording apparatus 100 performed when each button is actually pressed is described later.

The reading means 180 reads corresponding image data and so forth from the hard disk 130 in accordance with user's instructions to reproduce a television program. Typically, the HDD 17, the HDD control unit 18, and so forth are also used for the reading means 180.

When it is detected that the "merchandise browse/purchase button" or the "search button" has been pressed under a given condition, the access means 185 transmits a search request to make a search for articles of merchandise to the server on the network, and receives merchandise data as a search result.

The control means 190 is realized by the CPU 23, the main memory, programs stored therein, and so forth. The control means 190 controls the operation of each means 110 to 180 mentioned above.

Besides, the recording apparatus 100 includes a part that reproduces image data and so forth recorded on the hard disk 130, i.e., includes the MPEG decoder 20.

The management server 200 is composed of a signal receiving means 210, an allocating means 220, a recording means 230, a meta-information data base 240, an extracting means 250, a transmitting means 260, and a control means 270, each of which is described later.

The signal receiving means 210 is chiefly composed of an antenna and an analog or digital tuner. The signal receiving means 210 receives a television signal transmitted from the television signal transmitting station.

The allocating means 220 allocates a specific identifier to each element obtained by dividing image data and so forth contained in a television signal received by the signal receiving means 210 by, for example, the second. For example, a time index containing the date at which a television signal transmitted from a television signal transmitting station is received and a channel (ch) number by which a broadcasting station relative to this television signal can be specified can be used as the identifier. As one example, it is recommended to allocate time index 00000001 to a part that has been received at 0:0:0 - 0:0:1 and allocate time index 00000101 to a part that has been received at 0:0:1- 0:0:2 among television signals transmitted from a broadcasting station relative to one channel. In each time index, the higher six digits correspond to the receiving time 00:00:00 or 00:00:01, and the lower two digits correspond to 01 channel.

It is recommended to determine the television-signal receiving time based on an internal clock of the management server 200. It is recommended to adjust this internal clock by the use of, for example, NTP. Likewise, the recording apparatus 110 has an internal clock, and it is recommended to synchronize this internal clock with the internal clock of the management server 200 by the use of, for example, NTP.

Additionally, the time index may be allocated based on the time at which a television signal is input to the allocating means 220 or the relative time according to which the starting time of a television program is set at zero, instead of the television-signal receiving time. Alternatively, the time index may be allocated by each television program, by each television program corner creating the television program, or by each commercial incorporated into the television program.

If specific time indexes are allocated by, for example, the second as described above, a user can easily obtain information typically about clothes that a hero or a heroine has worn in one scene of a drama given as a television program together with meta-information.

In Example 1, as an example, a case is described in which time indexes are allocated to pieces of image data forming a television program, respectively. However, it is permissible to allocate time indexes to audio data or to text data for text broadcasting. Additionally, image data and so forth can be recorded onto, for example, a built-in HDD (not shown) of the management server 200.

The recording means 230 is realized as one function of a data base engine. The recording means 230 records, for example, a time index allocated by the allocating means 220 and meta-information input from, for example, an administrator of the management server 200, which are correlated with each other, onto the meta-information data base 240. It is not indispensable that one time index and one piece of meta-information are recorded as a pair. It is excessive in performance to perform recording while correlating meta-information with each time index one by one, for example, when an image scene does not change. Therefore, it is also possible to perform recording while correlating meta-information with a group of time indexes.

In order to achieve this recording process, it is recommended to provide the recording means 230 with a detecting portion that detects the change-over time at which an image scene is changed over, for example, based on a change in the sound volume level of audio data and based on a change in the brightness of image data, an imparting portion that imparts a time index corresponding to the change-over time of the image scene to an administrator or the like, a storage portion that records a group of time indexes and meta-information corresponding thereto onto the information data base 250 in the form of a pair when the administrator selects the start and the end of the group of time indexes based on a result obtained by being imparted, so that the administrator of the management server 200 can easily select the group of time indexes. What is detected by the detecting portion is not limited to the change-over time of an image scene. For example, the starting time of each CM data may be detected (in this case, the procedure in digital broadcasting is accomplished by detecting ID information indicating a correlation with a program or a commercial that is contained in a television signal and that is contained in image data.) This also makes it possible to record a group of time indexes corresponding to one piece of CM data and meta-information in the form of a pair onto the information data base 250.

The meta-information data base 240 is a data base onto which time indexes allocated by the allocating means 220 and meta-information corresponding to these time indexes are recorded. It is permissible for the meta-information to be formed by the administrator or the like of the management server 200, or to be transmitted from each user, or to be transmitted from a person who has offered clothes to performers of a drama that is a television program. No limitations are imposed on the type of the meta-information data base 240, and therefore any one of various data bases, such as an object data base or a relational data base, may be used, and other recording modes, such as files, may be used.

The extracting means 250 is realized as one function of a data base engine. The extracting means 250 extracts meta-information newly recorded onto the meta-information data base 240 after completing the last extracting process at a predetermined timing, e.g., at intervals of a predetermined time period ranging from one minute to one hour.

The transmitting means 260 transmits information contained in a meta-information program schedule extracted by the extracting means 250 to the recording apparatus 100 via the network 300 regularly and actively at intervals of, for example, one hour, or passively by receiving a transmission request from the recording apparatus 100.

The control means 270 is realized chiefly by a CPU, a main memory, and a program stored therein. The control means 270 controls the operation of each means 210 to 290 mentioned above. If a television signal is transmitted by terrestrial digital broadcasting, this includes an encrypting means for encrypting a data stream and a decrypting means for decrypting the data stream encrypted thereby.

Some of the means that have been disposed in the management server 200 may be disposed on the recording apparatus side (100), or these means may be disposed in a manner opposite to the above-mentioned manner. Additionally, a part of these means may be disposed on the network 300 separately from the management server 200 and the recording apparatus 100.

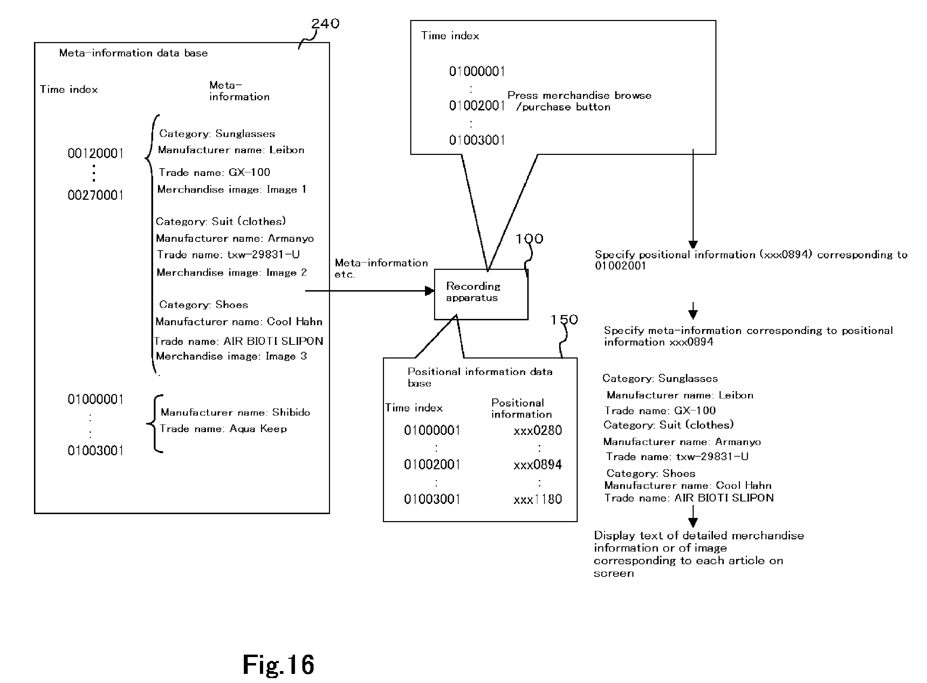

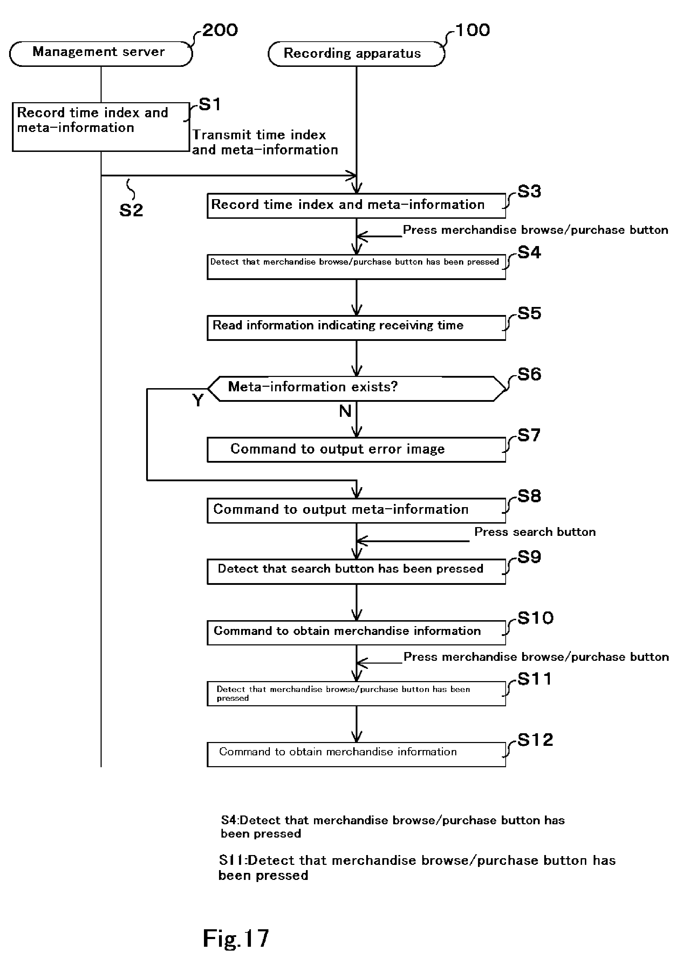

FIG. 16 is a schematic explanatory view of the operation of the information recording/reproducing system shown in FIG. 15. FIG. 17 is an operation-explaining view corresponding to the schematic explanatory view of FIG. 16.

First, in the management server 200, the recording means 230 records a time index and meta-information corresponding to this time index onto the meta-information data base 240 according to the control of the control means 270 (step S1).

FIG. 16 is a view showing meta-information recorded on the meta-information data base 240 and so forth. For example, a group of time indexes "00120001" - "00270001" corresponding to a 15-minute image scene, meta-information about a first article of merchandise containing that "category" is "sunglasses," "manufacturer name" is "Leibon," "trade name" is "GX-100," and "merchandise image" is "Image 1," meta-information about a second article of merchandise containing that "category" is "suit (clothes)," "manufacturer name" is "Armanyo," "trade name" is "txw-29831-U," and "merchandise image" is "Image 2," and meta-information about a third article of merchandise containing that "category" is "shoes," "manufacturer name" is "Cool Hahn," "trade name" is "AIR BIOTI SLIPON," and "merchandise image" is "Image 3" are recorded onto the meta-information data base 240 in the form of a pair.

Additionally, a group of time indexes "01000001" - "01003001" corresponding to, for example, a 30-second CM data and meta-information containing that "manufacturer name" is "Shibido," and "trade name" is "Aqua Keep" are recorded thereonto in the form of a pair.

Time indexes and meta-information recorded on the meta-information data base 240 are transmitted from the management server 200 to the recording apparatus 100 by the transmitting means 260, for example, when a transmission request is received from the recording apparatus 100 as mentioned above (step S2).

In the recording apparatus 100, time indexes and meta-information transmitted from the management server 200 are received by the receiving means 160. When meta-information and so forth are received by the receiving means 160, the data recording means 135 records these pieces of information onto the meta-information data base 140 (step S3).

If the meta-information data base 140 and the positional information data base 150 are formed as a single data base, the data recording means 135 specifies information indicating the receiving time corresponding to a time index based on this time index received by the receiving means 160 while referring to that data base. Thereafter, it is recommended to allow the data recording means 135 to correlate the meta-information, the information indicating the receiving time, and the positional information with each other, and then record these pieces of information onto that data base.

In this state, the above-mentioned CM data is output from the recording apparatus 100 to the display of the television 50, and let it be supposed that a user wants to obtain information about an article of merchandise introduced by the CM data. If so, the user may press the "merchandise browse/purchase button" mounted on the remote controller 40. Alternatively, it is permissible that the "cursor key" and the "determining button" are disposed instead of mounting the "merchandise browse/purchase button" on the remote controller 40, and an icon corresponding to the "merchandise browse/purchase button" is shown on the display of the television 50, thereafter the user selects this icon by operating the "cursor key," and the user obtains information about the article introduced by the CM data by pressing the "determining button."

Here, in the present example, the control means 190 is formed to always grasp positional information that is recorded on the positional information data base 150 and that is being reproduced. Therefore, when it is detected that the "merchandise browse/purchase button" has been pressed (step S4), the control means 190 can also grasp positional information corresponding to the detection timing.

The control means 190 outputs this positional information to the extracting means 155. Based on the positional information output from the control means 190, the extracting means 155 reads information indicating the receiving time recorded in correlation with the positional information while referring to the positional information data base 150 (step S5).

Thereafter, based on information indicating the receiving time and information indicating the television signal transmitting station, the extracting means 155 determines the existence of meta-information corresponding to the positional information of the CM data being reproduced while referring to the meta-information data base 140 (step S6).

If there is no meta-information corresponding thereto as a result of this determination, the control means 190 reads an error image, such as the message "There is no merchandise information" prepared in, for example, an image memory (not shown), and emits a command to output this error image on the display of the television 50 (step S7).

On the other hand, if there is meta-information corresponding thereto, the control means 190 reads this meta-information from the meta-information data base 140, and emits a command to output this meta-information on the display of the television 50 (step S8).

Furthermore, let it be supposed that the user wants to make a search for merchandise information relative to this meta-information. In this case, if a plurality of pieces of meta-information are being shown on the display of the television 50, it is recommended to allow the user to select one piece of meta-information from among those pieces of meta-information and then press the "search button" disposed on the remote controller 40. As an example, the "cursor key" mentioned above may be used instead of pressing the "search button."

When it is detected that the "search button" has been pressed (step S9), the control means 190 emits a command to obtain information relative to that article via the network toward the access means 185 (step S10). When this command is received, the access means 185 transmits a search request to the server on the network as a query concerning the meta-information about the article, and then receives merchandise information as a search result. This search may be made not only by a dedicated server but also by a Web page that performs a merchandise search service on the Internet.

As a result, the search result is shown on the display of the television 50, and the user can make a search for desired merchandise information through the search result shown on the display of the television 50. Further, it is permissible to dispose an information button or the like on the remote controller 40, and make a search for detailed information about an article of merchandise relative to meta-information through a page indicating a downloaded search result.

On the other hand, let it be supposed that the user wants to purchase an article of merchandise relative to the meta-information. In this case, it is recommended to allow the user to again press the "merchandise browse/purchase button" disposed on the remote controller 40 in a state in which the meta-information is shown on the display of the television 50.

When it is detected that the "merchandise browse/purchase button" has been pressed (step S11), the control means 190 emits a command toward the access means 185 so as to obtain merchandise information from the data base of a shopping portal site to a server on the network (step S12). When the command emitted from the control means 190 is received, the access means 185 transmits a search request to the server on the network, and receives merchandise information from the data base of the shopping portal site as a search result.

As a result, the search result is shown on the display of the television 50, and the user can purchase a desired article of merchandise through the search result shown on the display of the television 50.

### (Example 2)

In Example 2 of the present invention, meta-information that is offered to a user is enhanced, or the occurrence of a situation in which meta-information about an article of merchandise does not exist is reduced as much as possible, so that the trader (shop) side can make a successful bid for, can purchase, and can inherit the registration right of meta-information about a related article of merchandise relative to the article.

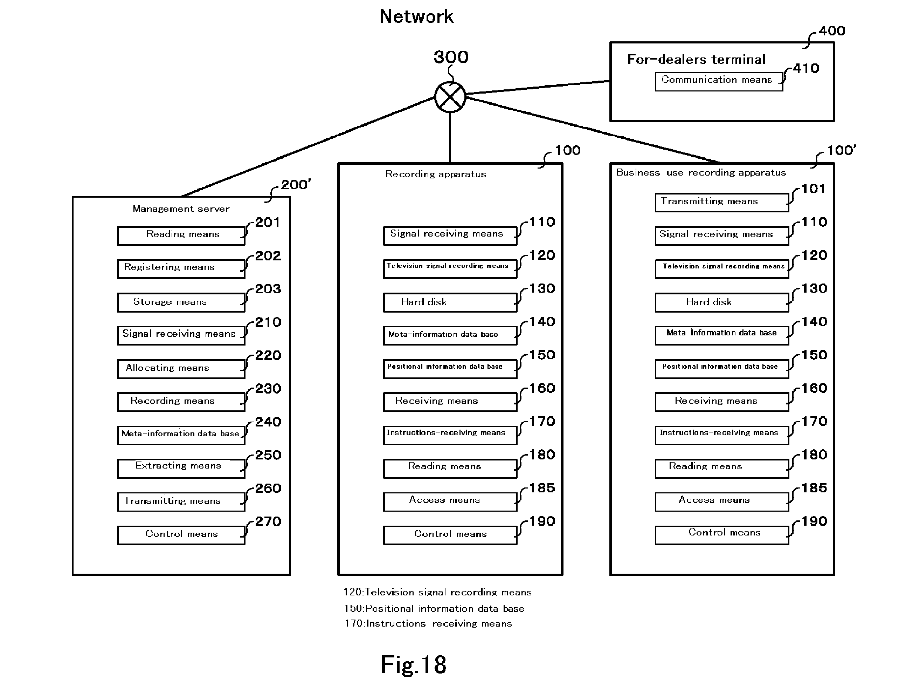

FIG. 18 is a function block diagram showing a schematic structure of an information recording/reproducing system according to Example 2 of the present invention. In FIG. 18, a business-use recording apparatus 100' for business use, a management server 200', and a for-dealers terminal 400 for dealers are shown in addition to the recording apparatus 100.

In addition to the structure and the function of the recording apparatus 100, the business-use recording apparatus 100' includes a transmitting means 101 for transmitting information, which indicates the receiving time and to which ID allocated to the terminal has been added, to the management server 200 in accordance with the instructions of the user of the business-use recording apparatus 100'.

In addition to the structure and the function of the management server 200, the management server 200' includes a reading means 201 for reading meta-information, which is recorded as the pair to a time index corresponding to the information indicating the receiving time transmitted from the transmitting means 101, from the meta-information data base 240, a registering means 202 for registering meta-information read by the reading means 201 on a personal page relative to the ID transmitted from the transmitting means 101, and a storage means 203 for storing meta-information registered by the registering means 202 and meta-information of a related article of merchandise uploaded from the for-dealers terminal 400 in the meta-information data base 240 by correlating these pieces of meta-information with each other.

The for-dealers terminal 400 includes a communication means 410 chiefly including a browser. The communication means 410 downloads a personal page that is created for each user of the business-use recording apparatus 100', that is created by an administrator or the like of the management server 200, and that is uploaded to a Web server (not shown), whereas the communication means 410 uploads meta-information, which has been input in an entry field of meta-information about a related article of merchandise prepared in the personal page, to the Web server.

Next, the operation of the information recording/reproducing system shown in FIG. 18 will be described, for example, in a case in which the registration right of meta-information about a related article of merchandise is transferred to a trader and in which meta-information offered to a user is enhanced. Even if a successful bid for the registration right is made, or even if the registration right is purchased instead of transferring the registration right, a change in the essentials of the operation of the information recording/reproducing system will not occur.

For example, let it be supposed that the user of the business-use recording apparatus 100' wants to transmit meta-information about a related article of merchandise relative to an article of merchandise contained in an image data to the recording apparatus 100 while the image data is being reproduced.

In this case, it is recommended to allow the user of the business-use recording apparatus 100' to press a "related-merchandise meta-information registering button" disposed on the remote controller 40 in a scene in which the above-mentioned article appears.

When it is detected that the "related-merchandise meta-information registering button" has been pressed, the control means 190 outputs positional information thereabout to the extracting means 155. Based on the positional information output from the control means 190, the extracting means 155 reads information indicating the receiving time recorded in correlation with the positional information while referring to the positional information data base 150, and outputs this information to the control means 190.

When the information indicating the receiving time output from the extracting means 155 is input, the control means 190 reads the ID of the terminal stored in the memory (not shown), then adds the ID to the information indicating the receiving time, and outputs the resulting information to the transmitting means 101.

When the information indicating the receiving time output from the control means 190 is input, the transmitting means 101 transmits this information to the management server 200.

In the management server 200', when the ID and the information indicating the receiving time transmitted from the transmitting means 101 are received, the control means 270 emits a command to read meta-information, which has been recorded as the pair to a time index corresponding to the information indicating the receiving time, from the meta-information data base 240 toward the reading means 201.

When the meta-information is read according to the command emitted from the control means 270, the reading means 201 outputs this meta-information to the registering means 202 along with the ID that has been added to the information indicating the receiving time.

When the ID and the meta-information output from the registering means 202 are input, the registering means 202 downloads a personal page from the Web server based on the ID, then adds the meta-information to the personal page, and registers the meta-information on the Web server.

Thereafter, the user of the business-use recording apparatus 100' inputs user's ID while operating the for-dealers terminal 400, and the communication means 410 accesses the Web server, and downloads the personal page. As a result, typically, the user of the business-use recording apparatus 100' can browse meta-information corresponding to information indicating the receiving time transmitted from the business-use recording apparatus 100' through the display of the for-dealers terminal 400.

Thereafter, let it be supposed that the user of the business-use recording apparatus 100' selects a desired piece of meta-information through the personal page by operating the for-dealers terminal 400, then inputs meta-information about a related article of merchandise relative to an article of merchandise, and the communication means 410 uploads the meta-information to the Web server. When that is uploaded thereto, the Web server extracts meta-information about the related article from the entry field into which meta-information about the related article is input, and reflects the meta-information on a built-in data base. Meta-information registered by the registering means 202 and meta-information about a related article of merchandise uploaded from the for-dealers terminal 400 are recorded onto this data base in a state in which these pieces of meta-information are correlated with each other.

Thereafter, the management server 200' accesses the Web server, and then the Web server sends information stored in the built-in data base to the management server 200' as a reply. In the management server 200', this information is received and stored in the meta-information data base 240 by the storage means 203 in a state in which the two kinds of pieces of meta-information sent from the Web server are correlated with each other.

As a result, the meta-information to which meta-information about the related article has been attached is transmitted when the meta-information is transmitted to the recording apparatus 100.

Although, as an example, a case in which meta-information about a related article of merchandise is registered has been described in order to enhance meta-information offered to users in Example 2, it is also possible to prevent the occurrence of a situation in which step S7 of Example 1 is executed and in which meta-information about an article of merchandise is not displayed.

It is recommended to adopt the following steps as concrete steps. In detail, when it is detected that the "related-merchandise meta-information registering button" has been pressed, the control means 190 of the business-use recording apparatus 100' outputs information indicating the receiving time output from the extracting means 155 to the reading means 180 in addition to the execution of the step of inputting the information indicating the receiving time.

Based on positional information output from the control means 190, the reading means 180 reads image data recorded in correlation with this positional information while referring to the hard disk 130, and outputs the image data to the control means 190.

When the image data output from the reading means 180 is input, the control means 190 adds information indicating the receiving time output from the extracting means 155 and the ID of the terminal to this image data, and outputs the resulting data to the transmitting means 101.

The image data output from the control means 190 is input, and then the transmitting means 101 transmits the image data to the management server 200'. In the management server 200', the registering means 202 adds the image data transmitted from the business-use recording apparatus 100' to the personal page. Thereafter, the user of the business-use recording apparatus 100' downloads the personal page through the for-dealers terminal 400, and hence can browse the image data transmitted from the business-use recording apparatus 100' through the display of the for-dealers terminal 400.

Thereafter, let it be supposed that the user of the business-use recording apparatus 100' inputs meta-information about an article of merchandise contained in the image data through the personal page by operating the for-dealers terminal 400, and the communication means 410 uploads the meta-information to the Web server. As a result, in the above-mentioned manner, the meta-information transmitted from the for-dealers terminal 400 is stored in the meta-information data base 240 in a state of being correlated with a time index relative to the information indicating the receiving time.

### (Example 3)

In Example 3 of the present invention, a description will be given of an information recording/reproducing system in which, typically, step S12 of Example 1 is executed for a user to purchase an article of merchandise, and, as a result, a purchase chance to purchase the article is provided to the user even if a shop that deals in the article does not exist or even if the article is in an out-of-stock state.

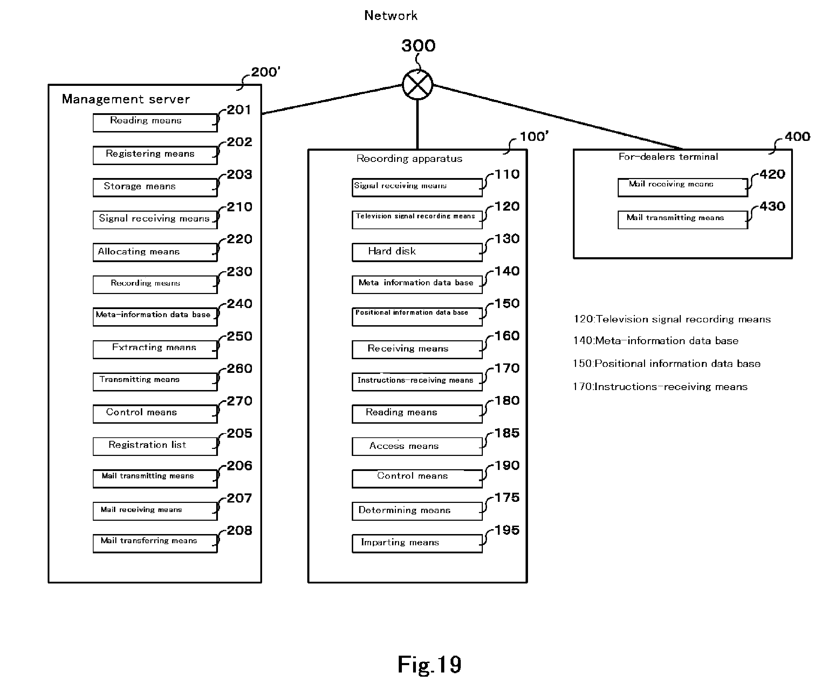

FIG. 19 is a function block diagram showing a schematic structure of an information recording/reproducing system according to Example 3 of the present invention. In FIG. 19, a recording apparatus 100', a management server 200', and a for-dealers terminal 400 are shown as a modification of FIG. 15.

In addition to the structure and the function of the recording apparatus 100, the recording apparatus 100' includes a determining means 175 for determining whether desired merchandise information exists or not in a search result, and an imparting means 195 for imparting a query or a corresponding piece of meta-information of the Web page and a notice containing the ID allocated to the apparatus to the management server 200' if the determining means 175 determines that the desired merchandise information does not exist.

In addition to the structure and the function of the management server 200, the management server 200' includes a registration list 205 of E-mail addresses that are contact addresses of merchandise dealers other than exhibitors of shopping portal sites and E-mail addresses each of which is registered as the pair to the ID of the recording apparatus 100', a mail transmitting means 206 for, when information is imparted from the imparting means 195, transmitting E-mails containing meta-information that is contained in the information imparted from the imparting means 195 to the E-mail addresses of the merchandise dealers registered in the registration list 205, a mail receiving means 207 for receiving E-mails sent from the merchandise dealers as a reply to the E-mails transmitted by the mail transmitting means 206, and a mail transferring means 208 for transferring the E-mails received by the mail receiving means 207 to the recording apparatus 100 based on the ID.

The for-dealers terminal 400 includes a mail receiving means 420 for receiving E-mails transmitted by the mail transmitting means 206, and a mail transmitting means 430 for transmitting an E-mail containing information about a sales price or the like to the management server 200' if an article of merchandise indicated by, for example, meta-information contained in an E-mail received by the mail receiving means 420 can be sold.

The present invention is not limited to the use of an E-mail as an information-transmitting medium, and therefore, for example, a messenger or a dedicated application may be used.

Next, the operation of the information recording/reproducing system shown in FIG. 19 will be described.

In the recording apparatus 100', the determining means 175 determines whether the message "There is no corresponding article" or the like is given to merchandise information obtained as a result of the access of the access means 185.

If the above-mentioned message is not given thereto as a result of the determination, desired merchandise information will exist, and therefore the subsequent operation is performed in the same way as in Example 1.

On the other hand, if the above-mentioned message is not given thereto, desired merchandise information will not exist, and therefore the determining means 175 instructs the imparting means 195 to impart a notice to the management server 200'. When the instructions are received from the determining means 175, the imparting means 195 transmits the above-mentioned query and the notice containing the ID to the management server 200'.

In the management server 200', when the notice is received from the imparting means 195, the control means 270 makes an E-mail containing the query and the ID, and inputs the E-mail addresses of the merchandise dealers registered in the registration list 205. As a result, this E-mail is transmitted to the merchandise dealers by the mail transmitting means 206.

In this example, the E-mail is received by the mail receiving means 420 of the for-dealers terminal 400. Accordingly, the E-mail sent from the management server 200' is shown on, for example, the display of the for-dealers terminal 400, and, if the merchandise dealer regards the article as being sold, and wants to actually sell the article, a reply E-mail containing pieces of information, such as a sales price and the contact address of a dealer's office, will be made.

The merchandise dealer operates the for-dealers terminal 400, and, as a result, the reply E-mail made in this manner is transmitted to the management server 200' by the mail transmitting means 430.

In the management server 200', the reply E-mail sent from the for-dealers terminal 400 is received by the mail receiving means 207, and, while referring to the ID (that has been attached when transmitted) contained in the reply E-mail, the control means 270 reads a corresponding E-mail address from the registration list 205 based on the ID, and inputs this address into the destination of the reply E-mail. As a result, this E-mail is transferred to the user of the recording apparatus 100 by the mail transferring means 208.

This enables the user of the recording apparatus 100 to make contact with a merchandise dealer with reference to the E-mail transferred therefrom, and to actually purchase an article of merchandise from the merchandise dealer.

### Brief Description of the Drawings

FIG. 1 is a schematic view showing the entire structure of a merchandise purchasing system according to the present invention.
FIG. 2 is a block diagram showing a hardware structure of a digital recording/reproducing apparatus.
FIG. 3 is a block diagram showing a hardware structure of an index server.
FIG. 4 is a view explaining a relationship between an image stream and an index table, (a) being a view of an image stream showing the recording position of a program image and the recording position of a CM image, (b) being a view showing a "recording position table," a "program information table," and a "CM information table" in order from above.
FIG. 5 is a block diagram showing a hardware structure of a CM merchandise data server.
FIG. 6 is a view explaining a correspondence relationship between a CM image and a piece of CM information character data stored in an index table.
FIG. 7 is a view showing a screen displayed when a shopping execution button is pushed in a state in which a program image is displayed on a television.
FIG. 8 is a flowchart showing steps ranging from a CM image screen to a merchandise purchase.
FIG. 9 is a view showing a screen displayed when the shopping execution button is pushed while a CM image is being displayed.
FIG. 10 is a view showing a detailed description of a predetermined article of merchandise and a purchase screen to which a transition is made when the article is selected.
FIG. 11 is a view showing a screen displayed when a CM search function is executed.
FIG. 12 is a view showing a CM search result screen displayed by using the CM search function.
FIG. 13 is a schematic view showing the entire system according to a second embodiment.
FIG. 14 is a flowchart showing each step of the entire system according to the second embodiment.
FIG. 15 is a function block diagram showing a schematic structure of an information recording/reproducing system (merchandise purchasing system) according to Example 1 of the present invention.
FIG. 16 is a schematic explanatory view of the operation of the information recording/reproducing system shown in FIG. 15.
FIG. 17 is an operation-explaining view corresponding to the schematic explanatory view of FIG. 16.
FIG. 18 is a function block diagram showing a schematic structure of an information recording/reproducing system according to Example 2 of the present invention.
FIG. 19 is a function block diagram showing a schematic structure of an information recording/reproducing system according to Example 3 of the present invention.

### Description of Symbols

- 10:: Digital recording/reproducing apparatus
- 11:: Antenna
- 12:: Tuner
- 13a, 13b:: Analog/digital (A/D) converter
- 14:: MPEG encoder
- 15:: Audio encoder
- 16:: Multiplexer
- 17:: HDD (hard disk)
- 17a:: Always-recording HDD
- 17b:: HDD for storage
- 18:: Hard disk control unit (HDD control unit)
- 19:: Demultiplexer
- 20:: MPEG decoder
- 21:: Audio decoder
- 22:: Digital/analog (D/A) converter
- 23:: CPU
- 24:: Memory
- 25:: Signal receiving unit
- 26:: Network controller
- 26b:: Real-time clock
- 27:: OSD
- 28:: Input unit
- 29:: DVD drive
- 30:: Index server
- 33:: Index table
- 40:: Remote controller
- 50:: Television
- 60:: CM merchandise data server
- 63:: Merchandise data base
- 70:: Automaker server
- 71:: Infomercial data base
- 72:: Estimate server

## Claims

1. A merchandise purchasing system wherein an index server and a merchandise data server are capable of transmitting an index table and merchandise data to a digital recording/reproducing apparatus via the Internet, the index server storing the starting time and the ending time of a program image or of a CM image of an image stream or storing an index table containing character information, the merchandise data server storing merchandise data relative to a program image or a CM image, the digital recording/reproducing system comprising a digital recording/reproducing apparatus capable of recording an image stream consisting of program images and CM images and a television capable of reproducing and outputting a recorded image stream, the digital recording/reproducing apparatus comprising:
a data receiving means for receiving an index table;
a merchandise data receiving means for receiving merchandise data from the merchandise data server;
a control means for reproducing an image stream on the television by using a received index table and for outputting merchandise data to the television; and
a purchase-wish-data transmitting means for transmitting purchase wish data relative to merchandise data output therefrom to the merchandise data server.

2. The merchandise purchasing system according to claim 1, **characterized in that**
the index table in the digital recording/reproducing apparatus includes an electronic tag table onto which, when a user performs an operation for a user's wish to cue a specific image while an image stream is being reproduced, a cueing signal pre-secured in a predetermined area of a recording means of the digital recording/reproducing apparatus is recorded by the operation for the user's wish, and
the control means extracts a corresponding cueing signal from the electronic tag table based on an operation performed to call the cueing signal by the operation of the user, and starts an image stream corresponding to the cueing signal by matching the cueing signal extracted therefrom with the image stream.

3. The merchandise purchasing system according to claim 1 or claim 2, **characterized in that** the digital recording/reproducing apparatus further comprises:
a merchandise-data request signal detecting means for detecting a merchandise-data request signal to request detailed merchandise data relative to a reproduced image; and
a merchandise-data request signal transmitting means for transmitting the fact that the merchandise-data request signal has been detected to the merchandise data server,
the merchandise data server comprising:
a request signal receiving means for receiving a merchandise-data request signal transmitted by the merchandise-data request signal transmitting means;
a merchandise data extracting means for extracting merchandise data corresponding to a merchandise-data request signal with reference to a pre-stored merchandise data base; and
a merchandise data transmitting means for transmitting merchandise data extracted thereby to the digital recording/reproducing apparatus.

4. The merchandise purchasing system according to any one of claim 1 to claim 3, **characterized in that** the merchandise data server comprises:
a sales-applicant recruitment data transmitting means for, if merchandise data corresponding to a merchandise-data request signal is not extracted by the merchandise data extracting means, transmitting sales-applicant recruitment data used to recruit a seller who can sell an article of merchandise relative to the merchandise data not extracted thereby via the Internet to a predetermined recruitment site;
a merchandise-sales data receiving means for receiving merchandise-sales data relative to a seller who has made a successful bid in the recruitment site; and
a merchandise-sales data transmitting means for transmitting merchandise-sales data received thereby to the digital recording/reproducing apparatus, and
the control means of the digital recording/reproducing apparatus outputs merchandise-sales data to the television.

5. The merchandise purchasing system according to any one of claim 1 to claim 4, **characterized in that** the index table contains CM information character data that specifies merchandise data relative to a CM image, and the CM information character data contains a CM sponsor name, a service name or a trade name relative to the CM sponsor, a CM performer name, a CM title, a CM insert music, and a type of business to which the CM sponsor belongs.

6. The merchandise purchasing system according to any one of claim 1 to claim 5, **characterized in that** the index table contains program information character data relative to a program image, and the program information character data has a link structure linking with merchandise data stored in the merchandise data server, thereby facilitating a search for the merchandise data.

7. The merchandise purchasing system according to any one of claim 1 to claim 6, **characterized in that** the merchandise data server comprises a purchase-wish-data receiving means for receiving purchase wish data transmitted from the purchase-wish-data transmitting means, and a payment means for executing payment for an article of merchandise by use of purchase wish data received therefrom.

8. The merchandise purchasing system according to any one of claim 1 to claim 7, **characterized in that** the merchandise data server includes related-merchandise data about an article of merchandise relative to an article of merchandise relative to merchandise data with a link structure linking with the merchandise data.

9. A recording/reproducing apparatus **characterized in that** the recording/reproducing apparatus is a digital recording/reproducing apparatus capable of recording an image stream consisting of program images and CM images and capable of being connected to a television capable of reproducing and outputting a recorded image stream, the digital recording/reproducing apparatus comprising:
an index table receiving means for receiving an index table from an index server in which an index table containing starting time and ending time of a program image or a CM image of an image stream or containing character information is stored;
a merchandise data receiving means for receiving merchandise data from a merchandise data server in which merchandise data relative to a program image or a CM image is stored;
a control means capable of reproducing an image on a television by use of a received index table and capable of outputting merchandise data received by the merchandise data receiving means to the television; and
a purchase-wish-data transmitting means for transmitting purchase wish data relative to the merchandise data output to the television to the merchandise data server.

10. The recording/reproducing apparatus according to claim 9, **characterized by** further comprising an electronic tag table onto which, when a user performs an operation for a user's wish to cue a specific image while an image stream is being reproduced, a cueing signal pre-secured in a predetermined area of a recording means of the digital recording/reproducing apparatus is recorded by the operation for the user's wish, and **characterized in that** the control means extracts a corresponding cueing signal from the electronic tag table by a cueing-signal calling operation performed by the user, and starts an image stream corresponding to the cueing signal by matching the cueing signal extracted therefrom with the image stream.

11. The recording/reproducing apparatus according to claim 9 or claim 10, **characterized by** further comprising:
a merchandise-data request signal detecting means for detecting a merchandise-data request signal to request detailed merchandise data relative to a reproduced image; and
a merchandise-data request signal transmitting means for transmitting the fact that the merchandise-data request signal has been detected to the merchandise data server, and
the merchandise data receiving means receives merchandise data that corresponds to a merchandise-data request signal and that has been extracted and transmitted by the merchandise data server.

12. A computer program **characterized in that** the computer program is a control program for a digital recording/reproducing apparatus capable of recording an image stream consisting of program images and CM images and capable of being connected to a television capable of reproducing and outputting a recorded image stream, and the program allows a control computer of the digital recording/reproducing apparatus to execute:
an index table receiving step of receiving an index table from an index server in which an index table containing starting time and ending time of a program image or a CM image of an image stream or containing character information is stored;
a merchandise data receiving step of receiving merchandise data from a merchandise data server in which merchandise data relative to a program image or a CM image is stored;
a control step of reproducing an image stream on a television by use of a received index table and outputting merchandise data received by the merchandise data receiving means to the television; and
a purchase-wish-data transmitting step of transmitting purchase wish data relative to the merchandise data output to the television to the merchandise data server.

13. The computer program according to claim 12, **characterized by** including an electronic tag table onto which, when a user performs an operation for a user's wish to cue a specific image while an image stream is being reproduced, a cueing signal pre-secured in a predetermined area of a recording means of the digital recording/reproducing apparatus is recorded by the operation for the user's wish, and **characterized in that** the control step extracts a corresponding cueing signal from the electronic tag table by a cueing-signal calling operation performed by the user, and starts an image stream corresponding to the cueing signal by matching the cueing signal extracted therefrom with the image stream.

14. A computer program **characterized in that** the computer program is a control program for a digital recording/reproducing apparatus capable of recording an image stream consisting of program images and CM images and capable of being connected to a television capable of reproducing and outputting a recorded image stream, and the program allows a control computer of the digital recording/reproducing apparatus to execute:
an index table receiving step of receiving an index table from an index server in which an index table containing starting time and ending time of a program image or a CM image of an image stream or containing character information is stored;
a control step of reproducing an image on a television by use of a received index table;
a merchandise-data request signal detecting step of detecting a merchandise-data request signal to request detailed merchandise data relative to a reproduced image;
a merchandise-data request signal transmitting step of transmitting the fact that the merchandise-data request signal has been detected to a merchandise data server;
a merchandise-data receiving step of receiving merchandise data relative to a merchandise-data request signal from the merchandise data server;
a merchandise-data outputting step of outputting received merchandise data to the television; and
a purchase-wish-data transmitting step of transmitting purchase wish data relative to the merchandise data output to the television to the merchandise data server.
